(19) **Europäisches Patentamt / European Patent Office / Office européen des brevets**

(11) **EP 4 641 991 A1**

(12) **EUROPEAN PATENT APPLICATION**
published in accordance with Art. 153(4) EPC

(43) Date of publication:
**29.10.2025 Bulletin 2025/44**

(21) Application number: **24806230.9**

(22) Date of filing: **09.04.2024**

(51) International Patent Classification (IPC):
**H04L 27/00** (2006.01)    **H04L 27/04** (2006.01)
**H04L 27/12** (2006.01)

(86) International application number:
**PCT/CN2024/086756**

(87) International publication number:
**WO 2024/234871 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.05.2023   CN 202310541631**

(71) Applicant: **ZTE Corporation**
**Shenzhen, Guangdong  518057 (CN)**

(72) Inventors:
• **LIU, Kun**
  **Shenzhen, Guangdong 518057 (CN)**
• **DAI, Bo**
  **Shenzhen, Guangdong 518057 (CN)**
• **CHEN, Mengzhu**
  **Shenzhen, Guangdong 518057 (CN)**
• **YANG, Weiwei**
  **Shenzhen, Guangdong 518057 (CN)**
• **HU, Youjun**
  **Shenzhen, Guangdong 518057 (CN)**
• **XU, Jun**
  **Shenzhen, Guangdong 518057 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **COMMUNICATION METHOD, COMMUNICATION APPARATUS, AND STORAGE MEDIUM**

(57)    The present disclosure provides a communication method, a communication apparatus, and a storage medium. The communication method comprises: sending a first sequence in a first resource.

S101 Send a first sequence in a first resource

FIG. 7

**Description**

The present disclosure claims a priority to Chinese patent application 202310541631.3, filed on May 12, 2023, the entire content of which is incorporated into the present disclosure by reference.

TECHNICAL FIELD

Embodiments of the present disclosure relate to the field of communication technologies, and in particular, to a communication method, a communication apparatus, and a storage medium.

BACKGROUND

In order to extend a battery life, a low power wake-up signal (LP-WUS) mechanism is considered to be introduced in the Rel-18 of the 3rd generation partnership project (3GPP), that is, a terminal device uses a separate receiver to receive or detect a low power wake-up signal transmitted from a base station. The terminal device that has received or detected the wake-up signal wakes up a main radio or turns the main radio on, or enables the main radio to enter into a working state, thereby performing data transmission and data reception.

SUMMARY

In an aspect, there is provided a communication method, applied to a transmitting end, where the communication method includes: transmitting a first sequence in a first resource.

In another aspect, there is provided a communication method, applied to a receiving end, where the communication method includes: determining a frequency domain location of a seventh frequency domain resource where a first sequence has been detected; and determining a frequency domain offset adjustment amount according to the frequency domain location of the seventh frequency domain resource.

In yet another aspect, there is provided a communication apparatus, where the communication apparatus includes: a transmitting unit, configured to transmit a first sequence in a first resource.

In yet another aspect, there is provided a communication apparatus, where the communication apparatus includes a determining unit, configured to: determine a frequency domain location of a seventh frequency domain resource where a first sequence has been detected, and determine a frequency domain offset adjustment amount according to the frequency domain location of the seventh frequency domain resource.

In yet another aspect, there is provided a communication apparatus, where the communication apparatus may include: a memory, a processor, and computer program instructions stored on the memory and executable on the processor, and the processor, upon executing the computer program instructions, implements the communication method in the above first aspect.

In yet another aspect, there is provided a communication apparatus, where the communication apparatus may include: a memory, a processor, and computer program instructions stored on the memory and executable on the processor, and the processor, upon executing the computer program instructions, implements the communication method in the above second aspect.

In yet another aspect, there is provided a computer-readable storage medium, where the computer-readable storage medium may be a readable non-volatile storage medium. The computer-readable storage medium has stored computer instructions or a program thereon, and the computer instructions or the program, upon being executed on a computer, enables the computer to be capable of performing the communication method in the above first aspect.

In yet another aspect, there is provided a computer-readable storage medium, where the computer-readable storage medium may be a readable non-volatile storage medium. The computer-readable storage medium has stored computer instructions or a program thereon, and the computer instructions or the program, upon being executed on a computer, enables the computer to be capable of performing the communication method in the above second aspect.

In yet another aspect, there is provided a computer program product containing instructions, and the instructions, upon being executed on a computer, enable the computer to be capable of performing the communication method in the above first aspect.

In yet another aspect, there is provided a computer program product containing instructions, and the instructions, upon being executed on a computer, enable the computer to be capable of performing the communication method in the above second aspect.

BRIEF DESCRIPTION OF THE DRAWINGS

In order to explain the technical solutions in the present disclosure more clearly, the drawings required to be used in some embodiments of the present disclosure will be introduced briefly below. It is obvious that the drawings in the following description are only drawings for some embodiments of the present disclosure, and for those of ordinary skill in the art, other drawings may also be obtained according to these drawings.

FIG. 1 is a schematic diagram of a generation method for an LP-WUS according to the embodiments of the present disclosure.

FIG. 2 is a schematic diagram of another generation method for an LP-WUS according to the embodiments of the present disclosure.

FIG. 3 is a schematic diagram of dividing a frequency domain resource of an LP-WUS according to the embodiments of the present disclosure.

FIG. 4 is a schematic structural diagram of a receiver according to the embodiments of the present disclosure.

FIG. 5 is a schematic structural diagram of another receiver according to the embodiments of the present disclosure.

FIG. 6 is a schematic structural diagram of a communication system according to the embodiments of the present disclosure.

FIG. 7 is a schematic diagram of a communication method according to the embodiments of the present disclosure.

FIG. 8 is a schematic diagram of another communication method according to the embodiments of the present disclosure.

FIG. 9 is a schematic diagram of a resource configured for a first timing according to the embodiments of the present disclosure.

FIG. 10 is a schematic diagram of another resource configured for a first timing according to the embodiments of the present disclosure.

FIG. 11 is a schematic diagram of yet another resource configured for a first timing according to the embodiments of the present disclosure.

FIG. 12 is a schematic diagram of yet another resource configured for a first timing according to the embodiments of the present disclosure.

FIG. 13 is a schematic diagram of yet another resource configured for a first timing according to the embodiments of the present disclosure.

FIG. 14 is a schematic diagram of yet another resource configured for a first timing according to the embodiments of the present disclosure.

FIG. 15 is a schematic diagram of yet another resource configured for a first timing according to the embodiments of the present disclosure.

FIG. 16 is a schematic diagram of yet another resource configured for a first timing according to the embodiments of the present disclosure.

FIG. 17 is a schematic diagram of yet another resource configured for a first timing according to the embodiments of the present disclosure.

FIG. 18 is a schematic diagram of yet another resource configured for a first timing according to the embodiments of the present disclosure.

FIG. 19 is a schematic diagram of yet another resource configured for a first timing according to the embodiments of the present disclosure.

FIG. 20 is a schematic diagram of yet another resource configured for a first timing according to the embodiments of the present disclosure.

FIG. 21 is a schematic structural diagram of a communication apparatus according to the embodiments of the present disclosure.

FIG. 22 is a schematic structural diagram of another communication apparatus according to the embodiments of the present disclosure.

FIG. 23 is a schematic structural diagram of yet another communication apparatus according to the embodiments of the present disclosure.

DETAILED DESCRIPTION

The technical solutions in the embodiments of the present disclosure will be described below clearly and completely in conjunction with the drawings in the embodiments of the present disclosure.

In the description of the present disclosure, unless otherwise stated, "/" means "or", for example, A/B may represent A or B. "And/or" herein is only to describe an association relationship of associated objects, representing that there may be three types of relationships. For example, A and/or B, may represent: only A, only B, and A and B. In addition, "at least one" refers to one or more, and "multiple (a/the plurality of)" refers to two or more than two. Wordings "first", "second", etc., do not limit the quantity or execution order, and the wordings "first", "second", etc., also do not limit that there is a difference. The "at least one (item) of" or similar expressions thereof refers to any combination of these items, including any combination of single (item) or multiple (items). For example, at least one (item) of a, b, or c, may represent: a, b, c, a and b, a and c, b and c, or a and b and c, where a, b, c may be single or multiple.

It should be noted that in the present disclosure, wordings, "exemplarily/exemplary" or "for example", etc., are used to represent examples, illustrations, or explanations. Any embodiments or design solutions described with "exemplarily/exemplary" or "for example" in the present disclosure should not be interpreted as being more preferred or advantageous than other embodiments or design solutions. Rather, the usage of wordings, "exemplarily" or "for example", etc., is intended to present relevant concepts in a specific manner.

In embodiments of the present disclosure, the "indication" and variations thereof may include a direct indication and an indirect indication. For example, the indication information in the following is taken as an example. The indication information may carry directly information A itself or an index of information A, to achieve the purpose of directly indicating the information A. Alternatively, the indication information may also carry information B associated with the information A, thereby achieving the purpose of indirectly indicating the information A while indicating the information B.

For the 5th generation (5G) communication system, in addition to latency, reliability, and availability, energy efficiency of a terminal device is also crucial. Currently, a 5G device may need to be charged weekly or daily according to personal usage time. Generally, the 5G device consumes tens of milliwatts of power in a radio resource control (RRC) idle state/inactive state and consumes hundreds of milliwatts of power in an RRC connected state. Therefore, extending a battery life is a necessary condition for enhancing energy efficiency and improving user experience.

The power consumption of the terminal device depends on a configured wake-up period length, e.g., a paging period. To satisfy a requirement on the battery life, a high-value extended discontinuous reception (eDRX) mode period may be used. However, this mode may result in a high latency, and thus is not suitable for services that have requirements on both a battery life and a low latency. Therefore, a low power wake-up signal (or low power wake-up signal, LP-WUS) mechanism is considered to be introduced in Rel-18 of the 3GPP. The terminal device uses a separate receiver to receive or detect a low power wake-up signal transmitted from a base station. The terminal device that has received or detected the wake-up signal wakes up a main radio unit or turns the main radio unit on, or enables the main radio unit to enter into an operating mode, thereby performing data transmission and data reception. When the terminal device has not received or detected a low power wake-up signal, the main radio unit is in a deep sleep state or in a turned-off state. In this way, the power consumption of the terminal device may be further reduced. However, the base station has a relatively high operational complexity upon generating a low power wake-up signal.

A waveform of an LP-WUS may be generated by adopting an on-off keying (OOK) modulation mode or a frequency-shift keying (FSK) modulation mode. The OOK modulation mode and the FSK modulation mode are explained below, respectively. 1. OOK modulation mode

In a case where a waveform of an LP-WUS is generated by adopting an OOK modulation mode, the LP-WUS may be referred to as an OOK based LP-WUS.

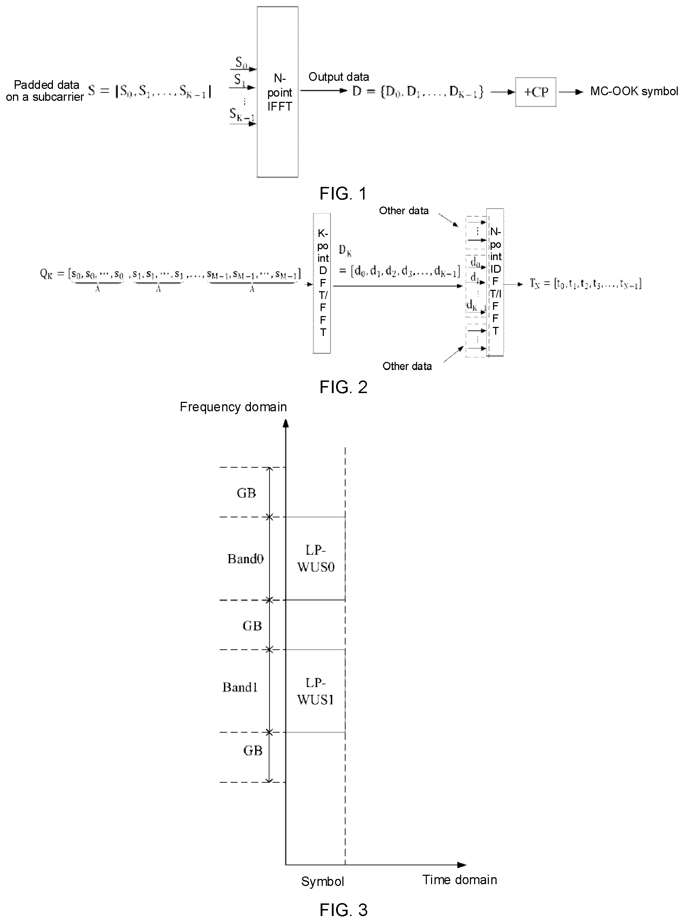

In an example, as shown in FIG. 1, FIG. 1 is a generation mode for an OOK based LP-WUS provided in the embodiments of the present disclosure.

The LP-WUS occupies K subcarriers in frequency domain. K is a positive integer. As shown in FIG. 1, data padded on the K subcarriers is $S=\{S_0, S_1, ..., S_{K-1}\}$. Data $D=\{D_0, D_1, ..., D_{N-1}\}$ may be generated by performing N-point inverse fast fourier transform (IFFT) or inverse discrete fourier transform on S. Both K and N are positive integers. Then, an adding CP (+CP) operation is performed on the data D to generate the OOK based LP-WUS.

Adding CP operation refers to padding last $N_{CP}$ elements in the data D to a starting location of the data D by a manner of cyclic shift, to obtain data $T = \{D_{N-N_{CP}}, D_{N-N_{CP}+1}, \cdots, D_{N-1}, D_0, D_1, D_2, \cdots, D_{N-1}\}$ having a length of $N+N_{CP}$.

In this example, since the number of subcarriers occupied by the LP-WUS in frequency domain is greater than 1, the LP-WUS may also be referred to as a multiple subcarriers (MC) - OOK based LP-WUS.

It should be noted that when bit information carried by the MC-OOK based LP-WUS is 1, not all elements in the data $S=\{S_0, S_1, ..., S_{K-1}\}$ padded on the above K subcarriers are 0. When the bit information carried by the MC-OOK based LP-WUS is 0, all elements in the data $S=\{S_0, S_1, ..., S_{K-1}\}$ padded on the K subcarriers are 0.

In yet another example, as shown in FIG. 2, FIG. 2 is a generation mode for yet another MC (multiple-carrier) -OOK based LP-WUS provided in the embodiments of the present disclosure.

Based on this generation mode, M consecutive MC-OOK based LP-WUSes may be generated at a time. M is a positive integer.

For example, the data transmitted on M OOK symbols, $S_M = [s_0, s_1, s_2, s_3 ..., s_{M-1}]$, is taken as an example. A data sequence $Q_K$ is obtained by converting $S_M$ based on a preset mode. A length of $Q_K$ is K.

For example, $Q_K = [\underbrace{s_0, s_0, \cdots, s_0}_{A}, \underbrace{s_1, s_1, \cdots, s_1}_{A}, ..., \underbrace{s_{M-1}, s_{M-1}, \cdots, s_{M-1}}_{A}]$ . A is a positive integer.

As shown in FIG. 2, K-point DFT/FFT operation is performed on the data sequence $Q_K$, a data sequence $D_K = [d_0, d_1, d_2, d_3, ..., d_{K-1}]$ may be obtained, and the data sequence $D_K$ is padded on the above K subcarriers.

When a bandwidth of the frequency domain includes N subcarriers, the N-point inverse discrete fourier transform (IDFT)/inverse fast fourier transform (IFFT) operations may be performed on the padded data on the N subcarriers, to obtain the time domain data of the N sample points, $T_N = [t_0, t_1, t_2, t_3, ..., t_{N-1}]$.

$T_N = [t_0, t_1, t_2, t_3, ..., t_{N-1}]$ is sample data of M OOK time domain symbols. $[t_0, t_1, t_2, t_3, ..., t_{N/M-1}]$ is sample point data of a first OOK time domain symbol among the M OOK time domain symbols, $[t_{N/M}, t_{N/M+1}, ..., t_{2N/M-1}]$ is sample point data of a second OOK time domain symbol among the M OOK time domain symbols, and so on; $[[t_{(M-1)N/M}, t_{(M-1)N/M+1}, ..., t_{N-1}]$ is sample point data of an M-th OOK time domain symbol among the M OOK time domain symbols.

In the embodiments of the present disclosure, before the time domain data $T_N$ of the above N sample points is transmitted, it is necessary to perform an adding CP operation on the $T_N$ to obtain time domain data of $(N+N_{CP})$ sample points, and then the time domain data of the $(N+N_{CP})$ sample points is transmitted. The adding CP operation may refer to the above description and will not be repeated herein.

It should be noted that both the generation methods shown in FIG. 1 and FIG. 2 may support frequency division multiplexing (FDM). That is, a transmission of multiple OOK based LP-WUSes is supported in frequency domain.

To avoid interference between the multiple OOK based LP-WUSes in frequency domain, a guard band (GB) may be configured. For example, as shown in FIG. 3, a frequency domain resource may be divided into a frequency band and a guard band. The frequency band may be used to transmit the LP-WUS. For example, a frequency band corresponds to an OOK based LP-WUS. A guard band may be set between frequency bands.

For example, as shown in FIG. 3, the frequency domain resource may be divided into two frequency bands (which are Band 0 and Band 1, respectively) and three guard bands. Band 0 may be used to transmit an LP-WUS0, and Band 1 may be used to transmit an LP-WUS1.

2. FSK modulation mode

In a case where the waveform of the LP-WUS is generated by adopting an FSK modulation mode, the LP-WUS may be referred to as an FSK based LP-WUS.

The number of subcarrier(s) occupied by the LP-WUS is greater than 1 in frequency domain, and thus, the FSK based LP-WUS may also be referred to as a multiple subcarriers (MC) - FSK based LP-WUS.

For an M-bit-MC-FSK generation mode, N subcarriers for the LP-WUS may be separated into M pairs of segments, and each pair of segments includes 2 segments. There is a guard band between adjacent two pairs of segments.

In an example, the segment includes one subcarrier or more consecutive subcarriers. In a pair of segments, one segment is modulated and the other segment is zero power. That is, the information padded on the subcarrier is 0.

That is, in the above M-bit-MC-FSK generation mode, M pairs of segments may be configured first. Then, in a pair of segments, a segment used when the MC-FSK is transmitted is selected to carry 1-bit information. For example, selecting a first segment in a pair of segments to transmit the MC-FSK represents that the carried 1-bit information is bit 0, and selecting a second segment in the pair of segments to transmit the MC-FSK represents the carried 1-bit information is bit 1. The receiving end determines whether the bit of the transmitted information is 1 or 0 according to a location of a detected segment that has a signal to be transmitted. After the detection for the M pairs of segments is completed, the M-bit information to be transmitted is determined.

In another example, the N subcarriers of the LP-WUS are separated into $2^M$ segments, with a guard band between every two segments and around each segment.

A segment includes one subcarrier or multiple consecutive subcarriers. One segment of the $2^M$ segments is modulated, and other segments of the SC (subcarrier) is zero power (from the perspective of a baseband). M>0, and N>1.

That is, in the above M-bit MC-FSK generation mode, $2^M$ segments may be configured first, and the M-bit information to be transmitted may be determined according to the location of the detected segment that has a signal to be transmitted. The LP-WUS is transmitted on only one segment at a same time.

In the FSK modulation mode, the MC-FSK modulation mode may be implemented by the above MC-OOK modulation mode.

In some embodiments, for the above MC-OOK based LP-WUS and MC-FSK based LP-WUS, the embodiments of the present disclosure further provide a receiver for receiving the LP-WUS.

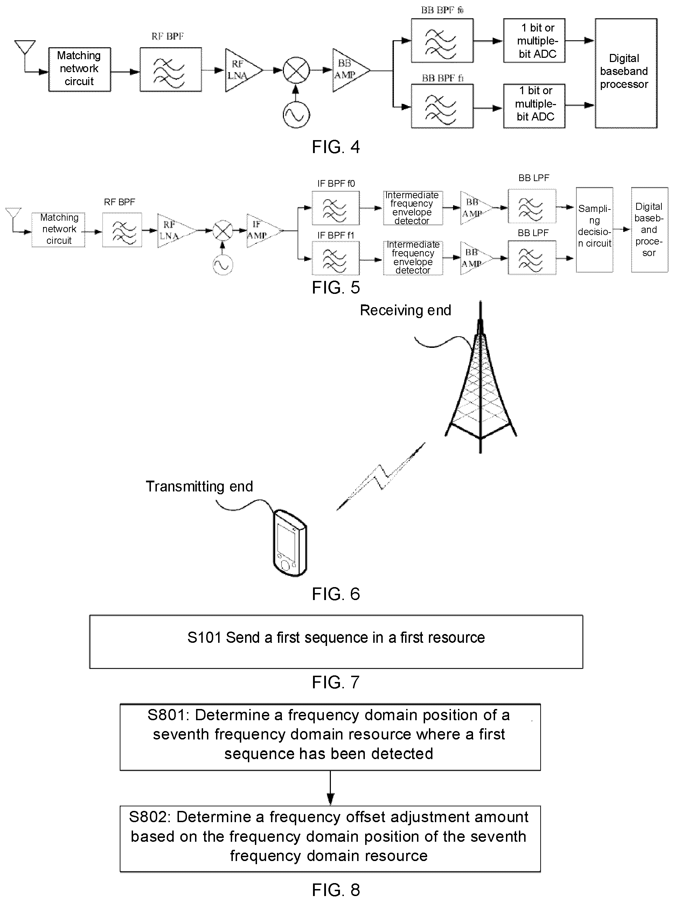

In an example, as shown in FIG. 4, FIG. 4 is a schematic structural diagram of a receiver with a parallel homodyne architecture provided in the embodiments of the present disclosure.

As shown in FIG. 4, the receiver may include a plurality of devices. For example, the plurality of devices may include: a matching network circuit, a radio frequency bandpass filter (RF BPF), a radio frequency low noise amplifier (RF LNA), a baseband amplifier (BB AMP), a baseband bandpass filter (BB BPF) (including BB BPFf$_0$ and BB BPFf$_1$), an analog-to-digital converter (ADC), and a digital baseband processor (digital BB processing). The connection manner of the plurality of devices may refer to FIG. 4 and will not be repeated. The functions of the plurality of devices may refer to the relevant technologies and will not be repeated.

In yet another example, as shown in FIG. 5, it is a schematic structural diagram of a receiver with a parallel heterodyne architecture provided in the embodiments of the present disclosure.

As shown in FIG. 5, the receiver may include a plurality of devices. For example, the plurality of devices may include: a matching network circuit, an RF BPF, an RF LNA, an intermediate frequency (IF) envelope detector, an IF AMP, an IF BPF f0, an IF BPF f1, a BB AMP, a BB LPF, a sampling decision circuit, and a digital baseband processor. The connection manner of the plurality of devices may refer to FIG. 5 and will not be repeated. The functions of the plurality of devices may refer to relevant technologies and will not be repeated.

The above receiver is susceptible to a frequency offset when receiving the LP-WUS. Therefore, it is necessary to reduce an influence of the frequency offset on the receiver.

In view of this, the embodiments of the present disclosure provide a communication method for reducing an influence of a frequency offset on a receiving end for a signal. In this method, a transmitting end transmits a first sequence in a first resource to assist a receiving end in determining an offset amount. The receiving end may determine a frequency offset adjustment amount by estimating a frequency offset through a detected first sequence. In this way, the receiving end may adjust an oscillation frequency of the receiving end. In this way, after adjusting the oscillation frequency of the receiving end, the receiving end may be capable of receiving a first signal normally.

It should be noted that the technical solutions provided in the embodiments of the present disclosure may be applied to various communication systems, e.g., a 6G communication system, a future evolution system, or multi-communication fusion systems, etc.

Exemplarily, FIG. 6 shows a schematic structural diagram of a communication system provided in the embodiments of the present disclosure. The communication system may include a transmitting end and a receiving end. The transmitting end may be in communication connection with the receiving end. For example, the transmitting end may be in communication connection with the receiving end through a wireless channel.

The transmitting end may be a network device. The receiving end for a signal may be a terminal.

The network device may be used to implement functions, such as resource scheduling, radio resource management, and wireless access control, etc., for a terminal. For example, the network device may be a small base station, a radio access point, a transmission and receive point (TRP) or a group of TRPs, a transmission point (TP), or any node of a certain type of other access nodes.

The terminal may also be referred to as a terminal device, a user equipment (UE), a mobile station, a mobile terminal, etc. The terminal device may be a mobile phone, a tablet, a computer with a wireless transceiving function, a virtual reality terminal device, an augmented reality terminal device, a wireless terminal in industrial control, a wireless terminal in unmanned driving, a wireless terminal in remote surgery, a wireless terminal in transportation safety, a wireless terminal in smart city, a wireless terminal in smart home, etc. The embodiments of the present disclosure do not limit the device form adopted by the terminal device.

It should be noted that FIG. 6 is only exemplary, and the number of devices and names of the devices included in FIG. 6 are not limited. Moreover, in addition to the devices shown in FIG. 6, the communication system may further include other devices, e.g., a core network device.

The application scenarios of the embodiments of the present disclosure are not limited. The system architecture and service scenarios described in the embodiments of the present disclosure are to explain the technical solutions of the embodiments of the present disclosure more clearly, and do not constitute a limitation on the technical solutions provided in the embodiments of the present disclosure. Those of ordinary skill in the art may know that with the evolution of the network architecture and the emergence of new service scenarios, the technical solutions provided in the embodiments of the present disclosure are also applicable to similar technical problems.

The communication method provided in the embodiments of the present disclosure is described below in conjunction with the communication system shown in FIG. 6. The actions, terminologies, etc., involved among the embodiments of the present disclosure may be mutually referenced without limitation.

As shown in FIG. 7, the embodiments of the present disclosure provide a communication method applied to a transmitting end. The communication method includes: in S101, transmitting a first sequence in a first resource.

The first sequence is a sequence for assisting a receiving end to estimate a frequency offset. The first sequence may have other names, e.g., a reference sequence, which is not limited.

In some embodiments, a number of element(s) in the first sequence is greater than or equal to 1.

In some embodiments, all elements of the first sequence are 1, or the elements of the first sequence include 1 and 0.

In some embodiments, a generation mode for the first sequence includes: an MC-OOK mode or an MC-FSK mode. It should be understood that other generation modes may be adopted for generating the first sequence, which is not limited.

In some embodiments, the first sequence may be the same as a first signal. In this case, the receiving end may determine whether a received signal is the first sequence or the first signal according to a time domain location of the received signal. Exemplarily, the first signal may be an LP-WUS or may also be other signals, which is not limited.

The first resource is a resource configured for the first sequence. The first resource corresponds to a first time domain resource in time domain and corresponds to a first frequency domain resource in frequency domain.

The first resource may be divided into at least one second resource. The second resource is a resource occupied by the first sequence in a single transmission process. The second resource corresponds to a second time domain resource in time domain and corresponds to a second frequency domain resource in frequency domain. The second frequency domain resource may be understood as a frequency domain resource occupied by the first sequence in a single transmission process. The second time domain resource may be understood as a time domain resource occupied by the first sequence in a single transmission process.

In view of this, the first resource includes at least one second time domain resource in time domain and at least one second frequency domain resource in frequency domain. Each second time domain resource corresponds to a second frequency domain resource.

Exemplarily, the first frequency domain resource includes at least one of: part or all of a frequency domain resource in a guard band configured for the first signal; part or all of a frequency domain resource in a third frequency domain resource configured for the first signal; part or all of a frequency domain resource in a fourth frequency domain resource occupied by the first signal; a fifth frequency domain resource having a first preset spacing with the third frequency domain resource in frequency domain; or a sixth frequency domain resource having a second preset spacing with the fourth frequency domain resource in frequency domain.

The first preset spacing may be predefined or configured by the transmitting end. In a case where the first preset spacing has a value of 0, the fifth frequency domain resource is adjacent to the third frequency domain resource in frequency domain.

The second preset spacing may be predefined or configured by the transmitting end. In a case where the second preset spacing has a value of 0, the sixth frequency domain resource is adjacent to the fourth frequency domain resource in frequency domain.

It should be understood that when the first sequence is transmitted on the part or all of the frequency domain resource in the guard band, on the fifth frequency domain resource, or on the sixth frequency domain resource, it is beneficial for the receiving end to better identify whether the detected signal is the first signal or the first sequence since the frequency domain resource occupied when the first sequence is transmitted does not overlap with the frequency domain resource occupied when the first signal is transmitted.

In the embodiments of the present disclosure, a resource configured for the first signal may be referred to as a third resource. The third resource may have a time domain dimension and a frequency domain dimension. The third resource corresponds to a third time domain resource in time domain and corresponds to a third frequency domain resource in frequency domain.

The third resource may be divided into at least one fourth resource. The fourth resource is a resource occupied by the first signal in a single transmission process. The fourth resource corresponds to a fourth time domain resource in time domain and a fourth frequency domain resource in frequency domain. The fourth time-frequency resource may be understood as a time domain resource occupied by the first signal in a single transmission process. The fourth frequency domain resource may be understood as a frequency domain resource occupied by the first signal in a single transmission process.

In view of this, the third resource includes at least one fourth time domain resource in time domain and includes at least one fourth frequency domain resource in frequency domain. Each fourth time domain resource corresponds to a fourth frequency domain resource.

In some embodiments, second frequency domain resources corresponding to different second time domain resources are configured independently.

In some embodiments, the second frequency domain resources corresponding to different second time domain resources are different from each other.

In some embodiments, the second frequency domain resources corresponding to different second time domain resources are taken from a set of second frequency domain resources. The set of second frequency domain resource includes at least one second frequency domain resource. The set of second frequency domain resource may be predefined or may also be determined by the receiving end or the transmitting end, which is not limited.

In some embodiments, the second time domain resource occupied by the first sequence does not overlap with the fourth time domain resource occupied by the first signal in time domain. In this way, the receiving end may be enabled to determine whether a received signal is the first sequence or the first signal according to the time domain location of the received signal.

In some embodiments, the second time domain resource occupied by the first sequence overlaps with the fourth time domain resource occupied by the first signal in time domain, and one of the following operations is performed: transmitting the first signal and stopping transmitting the first sequence; or, stopping transmitting the first sequence and the first signal. In this way, the receiving end may be enabled to determine whether a received signal is the first sequence or the first signal according to the time domain location of the received signal.

In some embodiments, the implementation of S101 may include one of the following manner 1 to manner 5.

Manner 1: a first sequence is transmitted in one first resource.

Manner 2: multiple first sequences are transmitted in a first resource.

Manner 3: a first sequence is transmitted in respective first resources of multiple first resources, respectively.

Manner 4: multiple first sequences are transmitted in each first resource of the first resources, respectively.

Manner 5: a first sequence is transmitted in each first resource of N first resources, and multiple first sequences are transmitted in each first resource of M first resources. N is a positive integer, and M is a positive integer.

In some embodiments, for multiple first sequences transmitted in a same first resource, the multiple first sequences may be transmitted simultaneously, that is, the multiple first sequences occupy a same second time domain resource.

In some embodiments, for multiple first sequences transmitted in a same first resource, the multiple first sequences satisfy at least one of: second frequency domain resources occupied by respective first sequences of the multiple first sequences are independently configured; the second frequency domain resources occupied by the respective first sequences of the multiple first sequences are configured by the transmitting end; the second frequency domain resources occupied by the respective first sequences of the multiple first sequences are different from each other; or the second time domain resources occupied by the respective first sequences in the multiple first sequences are different from the fourth time domain resource occupied by the first signal.

The multiple first sequences may be the same as each other or not all of the multiple first sequences may be the same as each other. The generation modes for the multiple first sequences may be configured independently or may be configured jointly.

In some embodiments, the above resources (e.g., the first resource or the second resource) may be predefined or may be configured by the transmitting end, which is not limited.

Based on the above embodiments, a transmitting end transmits a first sequence in a first resource, so that a receiving end may estimate a frequency offset by a detected first sequence to determine a frequency offset adjustment amount, thereby adjusting an oscillation frequency of a receiver at the receiving end. In this way, after adjusting the oscillation frequency of the receiving end, the receiving end can enhance a success rate of reception or reception performance of a first signal. It can be seen that the technical solutions provided in the embodiments of the present disclosure can reduce a probability of missed detection/false detection of the first signal due to the frequency offset.

As shown in FIG. 8, the embodiments of the present disclosure provide another communication method applied to a receiving end, and the communication method includes the following S801 and S802.

In S801, a frequency domain location of a seventh frequency domain resource where a first sequence has been detected is determined.

The relevant introduction of the first sequence may refer to the above introduction, which is not repeated here.

In S802, a frequency offset adjustment amount is determined based on the frequency domain location of the seventh frequency domain resource.

The frequency offset adjustment amount is used to adjust an oscillation frequency of a receiver at the receiving end.

As an implementation, the receiving end determines a frequency offset amount based on the frequency domain location of the seventh frequency domain resource. The receiving end determines the frequency offset adjustment amount according to the frequency offset amount.

In this way, after determining the frequency offset adjustment amount, the receiving end may adjust the oscillation frequency of the receiver according to the frequency offset adjustment amount. For example, an oscillation frequency of a Local Oscillator in the receiver is adjusted.

As an example, in a case where a first sequence has been detected on one seventh frequency domain resource, the frequency offset amount may be determined based on the frequency domain location of the seventh frequency domain resource and a frequency domain location of a second frequency domain resource corresponding to the seventh frequency domain resource. The frequency offset amount is a spacing between the frequency domain location of the seventh frequency domain resource and the frequency domain location of the corresponding second frequency domain resource.

As another example, in a case where a first sequence has been detected on multiple seventh frequency domain resources, for each seventh frequency domain resource of the multiple seventh frequency domain resources, the frequency offset amount corresponding to the seventh frequency domain resource is determined according to the frequency domain location of the seventh frequency domain resource and the frequency domain location of the corresponding second frequency domain resource. Afterwards, the frequency offset amount of the receiving end is determined according to the frequency offset amount corresponding to each seventh frequency domain resource of the multiple seventh frequency domain resources. For example, the maximum frequency offset amount among the frequency offset amounts corresponding to respective seventh frequency domain resources among the multiple seventh frequency domain resources may be used as the frequency offset amount of the receiving end.

For example, the first sequence has been detected on a seventh frequency domain resource 1 and a seventh frequency domain resource 2, by the receiving end. The receiving end determines the frequency offset amount corresponding to the seventh frequency domain resource 1 as a Frequency Offset according to a frequency domain location of a first frequency domain resource 1 and a frequency domain resource location of a corresponding second frequency domain resource; and determines the frequency offset amount corresponding to the seventh frequency domain resource 2 as a Large Frequency Offset according to a frequency domain location of a first frequency domain resource 2 and a frequency domain resource location of a corresponding second frequency domain resource. The Large Frequency Offset is greater than the Frequency Offset. The receiving end may regard the Large Frequency Offset as the frequency offset amount of the receiving end.

The second frequency domain resource corresponding to the seventh frequency domain resource is a second frequency domain resource used by the transmitting end when transmitting the first sequence that has been detected by the receiving end in the seventh frequency domain resource. As an example, in a case where a second frequency domain resource is configured on a time domain resource (i.e., a fifth time domain resource) in which the receiving end has detected the first sequence, the second frequency domain resource is a second frequency domain resource corresponding to the seventh frequency domain resource. As another example, in a case where multiple second frequency domain resources are configured on a time domain resource (i.e., the fifth time domain resource) where the receiving end has detected the first sequence, the second frequency domain resource having a smallest spacing with the seventh frequency domain resource may be used as the second frequency domain resource corresponding to the seventh frequency domain resource. As another example, the second frequency domain resource occupied by the first sequence with a corresponding content may also be determined based on the content of the first sequence detected on the fifth frequency domain resource. It should be understood that the embodiments of the present disclosure do not limit the manner for determining the second frequency domain resource corresponding to the seventh frequency domain resource.

In some embodiments, a calculation manner for the frequency offset amount may be that: the frequency offset amount may be equal to a value of a frequency domain starting location (or a frequency domain ending location) of the seventh frequency domain resource minus a value of a frequency domain starting location (or a frequency domain ending location) of a corresponding second frequency domain resource. Thus, the value of the frequency domain location of the seventh frequency domain resource is greater than the value of the frequency domain location of the corresponding second frequency domain resource, and the frequency offset amount is positive; and on the contrary, the frequency offset amount is negative. In view of this, in a case where the frequency offset amount is positive, the frequency offset adjustment amount is negative to reduce the oscillation frequency of the receiver at the receiving end. In a case where the frequency offset amount is negative, the frequency offset adjustment amount is positive to increase the oscillation frequency of the receiver at the receiving end.

In some embodiments, another calculation manner for the frequency offset amount may be that: the frequency offset amount may be equal to a value of a frequency domain starting location (or a frequency domain ending location) of the second frequency domain resource minus a value of a frequency domain starting location (or a frequency domain ending location) of the seventh frequency domain resource. Thus, the value of the frequency domain location of the seventh frequency domain resource is greater than the value of the frequency domain location of the corresponding second frequency domain resource, and the frequency offset amount is negative; and on the contrary, the frequency offset amount is positive. In view of this, in a case where the frequency offset amount is negative, the frequency offset adjustment amount is negative to reduce the oscillation frequency of the receiver at the receiving end. In a case where the frequency offset amount is positive, the frequency offset adjustment is positive to increase the oscillation frequency of the receiver at the receiving end.

In some embodiments, a monotonically increasing relationship may be satisfied between an absolute value of the frequency offset amount and an absolute value of the frequency offset adjustment amount. For example, the absolute value of the frequency offset adjustment amount may be predefined to include L1 and L2, where L2 is greater than L1. In a case where the absolute value of the frequency offset amount is located in a range of (0, R1), a corresponding frequency offset adjustment amount is L1. In a case where the absolute value of the frequency offset amount is located in a range of [R1, + ∞), a corresponding frequency offset adjustment amount is L2. R1, L1, and L2 each are positive integers.

Based on the above embodiments, a receiving end may estimate a frequency offset by a detected first sequence, and determine a frequency offset adjustment amount, to adjust an oscillation frequency of a receiver at the receiving end. In this way, the receiver may receive a first signal normally after adjusting the oscillation frequency of the receiver. It can be seen that the technical solutions provided in the embodiments of the present disclosure may reduce a probability of missed detection of the first signal due to the frequency offset.

The communication method provided in the embodiments of the present disclosure is explained below in conjunction with examples. It should be understood that the following examples should not limit the communication method provided in the embodiments of the present disclosure.

Example one

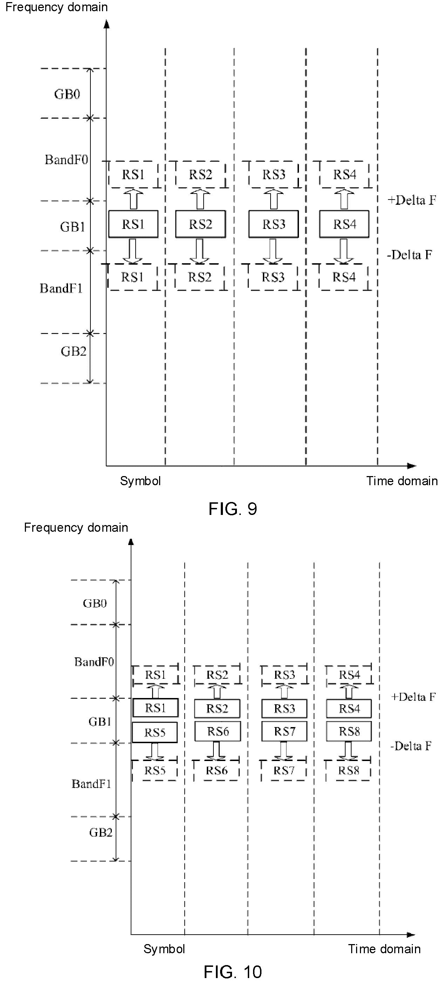

As shown in FIG. 9, for a 2-bit MC-OOK, 2 Frequency bands are configured in frequency domain, defined as BandFO and BandF1, respectively. Each band occupies multiple subcarriers in frequency domain, and the LP-WUS is transmitted adopting an MC-OOK scheme on each band. At the same time, the system has configured 3 Guardbands (GBs) for the LP-WUS, defined as GB0, GB1, and GB2, respectively.

(1) The transmitting end may transmit the first sequence in the GB1. That is, the second frequency domain resource occupied by the first sequence is located in the GB1.

As an example, a frequency domain location of a center subcarrier of the second frequency domain resource may be the same as a frequency domain location of a center subcarrier of the GB1.
As an example, a bandwidth of the second frequency domain resource is less than or equal to a bandwidth of the GB1.
As an example, the transmitting end does not transmit the LP-WUS upon transmitting the first sequence.
As an example, the transmitting end may transmit multiple first sequences on different time domain resources. As shown in FIG. 9, frequency domain resources occupied by a first sequence (RS) 1 to a first sequence 4 may be the same, but time domain resources occupied by the first sequence 1 to the first sequence 4 are different. The first sequence 1 to the first sequence 4 may be the same as, different from, or partially the same.
(2) The receiving end may perform the following operations.
When the first sequence has been detected in the BandF0, it is confirmed that a positive frequency offset has occurred in the frequency domain resource in which the first sequence has been received, i.e., a + Frequency Offset. When it is determined that the + Frequency Offset occurs, the oscillation frequency of the Local Oscillator is reduced by a value.
When the first sequence has been detected in the BandF1, it is confirmed that a negative frequency offset has occurred in frequency domain resource corresponding to a received first sequence, i.e., a - Frequency Offset. When it is determined that the - Frequency Offset occurs, the oscillation frequency of the Local Oscillator is increased by a value.

Example two

As shown in FIG. 10, for a 2-bit MC-OOK, 2 Frequency bands are configured in frequency domain, defined as BandFO and BandF1, respectively. Each band occupies multiple subcarriers in frequency domain, and the LP-WUS is transmitted adopting an MC-OOK scheme on each band. At the same time, the system has configured 3 Guardbands for the LP-WUS, defined as GB0, GB1, and GB2, respectively.

(1) The transmitting end may transmit 2 first sequences in the GB1, that is, at a moment, transmit a first sequence 1 and a first sequence 5, or transmit a first sequence 2 and a second sequence 6, or transmit a first sequence 3 and a first sequence 7, or transmit a first sequence 4 and a first sequence 8.

As shown in FIG. 10, RS1 to RS4 occupy a same frequency domain resource, but occupy different time domain resources; and RS5 to RS8 corresponds to a same frequency domain resource, but different time domain resources. All the RS1 to RS4 may be the same, all the RS1 to RS4 may be different, or the RS1 to RS4 may be partially the same. All the RS5 to RS8 may be the same all the RS5 to RS8 may be different, or the RS5 to RS8 may be partially the same.
As an example, a starting subcarrier of the second frequency domain resource occupied by the first sequence 1 to the first sequence 4 is located at an upper boundary of the GB1.
As an example, an ending subcarrier of the second frequency domain resource occupied by the first sequence 5 to the first sequence 8 is located at a lower boundary of the GB1.
As an example, a bandwidth of the second frequency domain resource occupied by the first sequence 1 to the first sequence 4 or the first sequence 5 to the first sequence 8 is less than or equal to half of a bandwidth of the GB1. That is, the frequency domain resource occupied by the first sequence does not overlap with the frequency domain occupied by the LP-WUS.
As an example, the second frequency domain resource occupied by the first sequence 1 to the first sequence 4 does not overlap with the second frequency domain resource occupied by the first sequence 5 to the first sequence 8.
As an example, the transmitting end does not transmit the LP-WUS upon transmitting the first sequence.
(2) The receiving end may perform the following operations.
When one or more of the first sequence 1 to the first sequence 4 have been detected in the BandF0, it is confirmed that a + Frequency Offset has occurred. When it is determined that the + Frequency Offset occurs, the Frequency of the Local Oscillator is reduced by a value (e.g., L1).
When one or more of the first sequence 5 to the first sequence 8 have been detected in the BandF1, it is confirmed that a - Frequency Offset has occurred. When it is determined that a Frequency Offset occurs, the Frequency of the Local Oscillator is increased by a value (e.g., L1).

When one or more of the first sequence 5 to the first sequence 8 have been detected in the BandF0, it is confirmed that a + larger Frequency Offset has occurred. When it is determined that the + larger Frequency Offset has occurred, the Frequency of the Local Oscillator is reduced by a large value (e.g., L2).

When one or more of the first sequence 1 to the first sequence 4 have been detected in the BandF1, it is confirmed that a - larger Frequency Offset has occurred. When it is determined that the - larger frequency offset has occurred, the Frequency of the Local Oscillator is increased by a large value (e.g., L2).

Example Three

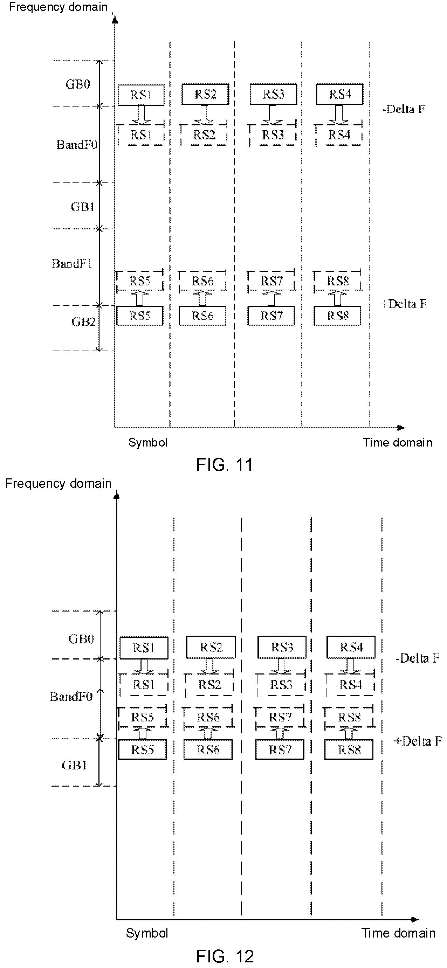

As shown in FIG. 11, for a 2-bit MC-OOK, 2 Frequency bands are configured in frequency domain, defined as BandFO and BandF1, respectively. Each band occupies multiple subcarriers in frequency domain, and the LP-WUS is transmitted adopting an MC-OOK scheme on each band. At the same time, the system has configured 3 Guardbands for the LP-WUS, defined as GB0, GB1, and GB2, respectively.

(1) The transmitting end may transmit 1 sequence in the GB0 and transmit 1 sequence in the GB2. For example, at a moment, any one of the first sequence 1 to the first sequence 4 is transmitted in the GB0 at a moment, and any one of the first sequence 5 to the first sequence 8 is transmitted in the GB2.

As shown in FIG. 11, in the GB0, RS1 to RS4 occupy a same frequency domain resource, but occupy different time domain resources. In the GB2, RS5 to RS8 occupy a same frequency domain resource, but occupy different time domain resources.

As an example, an ending subcarrier of the second frequency domain resource occupied by the first sequence 1 to the first sequence 4 are located at a lower boundary of the GB0.

As an example, a starting subcarrier of the second frequency domain resource occupied by the first sequence 5 to the first sequence 8 is located at an upper boundary of the GB2.

As an example, a bandwidth of the second frequency domain resource occupied by the first sequence 1 to the first sequence 4 is less than or equal to a bandwidth of the GB0.

As an example, a bandwidth of the second frequency domain resource occupied by the first sequence 5 to the first sequence 8 is less than or equal to a bandwidth of the GB2.

As an example, the transmitting end does not transmit the LP-WUS when transmitting the first sequence.

All the RS1 to RS4 may be the same, all the RS1 to RS4 may also be different, or the RS1 to RS4 may be partially the same. All the RS5 to RS8 may be the same, all the RS5 to RS8 may also be different, or the RS5 to RS8 may be partially the same.

(2) The receiving end may perform the following operations.

When one or more of the first sequence 5 to the first sequence 8 have been detected in the BandF1, it is confirmed that a + Frequency Offset has occurred. When it is determined that the + Frequency Offset occurs, the Frequency of the Local Oscillator is reduced by a value (e.g., L1).

When one or more of the first sequence 1 to the first sequence 4 have been detected in the BandF0, it is confirmed that a - Frequency Offset has occurred. When it is determined that the - Frequency Offset occurs, the Frequency of the Local Oscillator is increased by a value (e.g., L1).

Example four

As shown in FIG. 12, for a 1-bit MC-OOK, 1 Frequency band is configured in frequency domain, defined as BandFO. Each band occupies multiple subcarriers in frequency domain, and the LP-WUS signal is transmitted adopting an MC-OOK scheme on each band. At the same time, the system has configured 2 Guardbands for the LP-WUS, defined as GB0 and GB1, respectively.

(1) The transmitting end may transmit 1 sequence in the GB0 and transmit 1 sequence in the GB1. For example, at a moment, any one of the first sequence 1 to the first sequence 4 may be transmitted in the GB0. For another example, at a moment, any one of the first sequence 5 to the first sequence 8 is transmitted in the GB1.

As an example, an ending subcarrier of the second frequency domain resource occupied by the first sequence 1 to the first sequence 4 is located at a lower boundary of the GB0.

As an example, a starting subcarrier of the second frequency domain resource occupied by the first sequence 5 to the first sequence 8 is located at an upper boundary of the GB1.

As an example, a bandwidth of the second frequency domain resource occupied by the first sequence 1 to the first sequence 4 is less than or equal to a bandwidth of the GB0.

As an example, a bandwidth of the second frequency domain resource occupied by the first sequence 5 to the first sequence 8 is less than or equal to a bandwidth of the GB2.

As an example, the transmitting end does not transmit the LP-WUS upon transmitting the first sequence.

For a GB, the transmitting end may transmit multiple sequences on different time domain resources. For example, as shown in FIG. 12, in the GB0, RS1 to RS4 occupy a same frequency domain resource, but occupy different time domain resources. In the GB2, RS5 to RS8 occupy a same frequency domain resource, but occupy different time domain resources.

All the RS1 to RS4 may be the same, all the RS1 to RS4 may be different, or the RS1 to RS4 may be partially the same. All the RS5 to RS8 may be the same, all the RS5 to RS8 may be different, or the RS5 to RS8 may be partially the same.

(2) The receiving end may perform the following operations.

When a first sequence 5 has been detected in the BandF0, it is confirmed that a + Frequency Offset has occurred. When it is determined that the + Frequency Offset occurs, the Frequency of the Local Oscillator is reduced by a value (e.g., L1).

When a first sequence 1 has been detected in the BandF0, it is confirmed that a - Frequency Offset has occurred. When it is determined that the - Frequency Offset occurs, the Frequency of the Local Oscillator is increased by a value (e.g., L1).

Example five

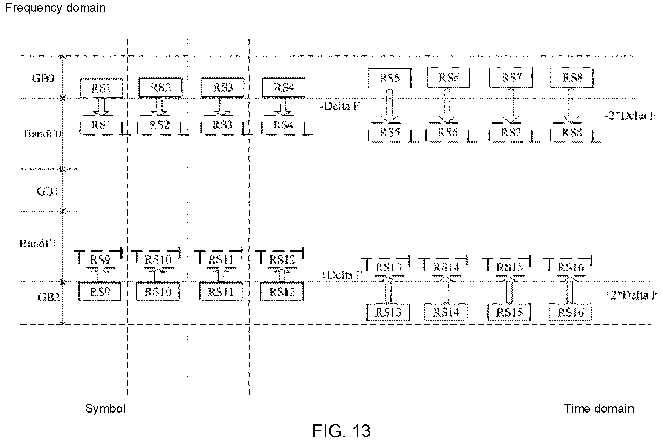

As shown in FIG. 13, for a 2-bit MC-OOK, 2 Frequency bands are configured in frequency domain, defined as BandFO and BandF1, respectively. Each band occupies multiple subcarriers in frequency domain, and the LP-WUS signal is transmitted adopting an MC-OOK scheme on each band. At the same time, the system has configured 3 Guardbands for the LP-WUS, defined as GB0, GB1, and GB2, respectively.

(1) The transmitting end may transmit 1 sequence on the GB0 and transmit 1 sequence on the GB2. For example, at a moment, any one of the first sequence 1 to the first sequence 8 is transmitted in the GB0. For example, at a moment, any one of the first sequence 9 to the first sequence 16 is transmitted in the GB2.

As shown in FIG. 13, in the GB0, RS1 to RS4 occupy a same frequency domain resource, but occupy different time domain resources. RS5 to RS8 occupy a same frequency domain resource, but occupy different time domain resources. The frequency domain resource occupied by RS1 to RS4 is different from the frequency domain occupied by RS5 to RS8, and the time domain resource occupied by RS1 to RS4 is also different from the time domain occupied by RS5 to RS8. In the GB2, RS9 to RS12 occupy a same frequency domain resource, but occupy different time domain resources. RS13 to RS16 occupy a same frequency domain resource, but occupy different time domain resources. The frequency domain resource occupied by RS9 to RS12 is different from the frequency domain resource occupied by RS13 to RS16, and the time domain resource occupied by RS9 to RS12 is different from the time domain resource occupied by RS13 to RS16.

As an example, an ending subcarrier of the second frequency domain resource occupied by the first sequence 1 is located at a lower boundary of the GB0.

As an example, a starting subcarrier of the second frequency domain resource occupied by the first sequence 9 is located at an upper boundary of the GB2.

As an example, a bandwidth of the second frequency domain resource occupied by the first sequence 1 is less than or equal to a bandwidth of the GB0.

As an example, a bandwidth of the second frequency domain resource occupied by the first sequence 9 is less than or equal to a bandwidth of the GB2.

As an example, the transmitting end does not transmit the LP-WUS when transmitting the first sequence.

All the RS1 to RS8 may be the same, all the RS1 to RS8 may be different, or the RS1 to RS8 may be partially the same. All the RS9 to RS16 may be the same, all the RS9 to RS16 may be different, or the RS9 to RS16 may be partially the same.

(2) The receiving end may perform the following operations.

When one or more of the first sequence 1 to the first sequence 4 have been detected in the BandF0, it is confirmed that a - Frequency Offset has occurred. When the Frequency Offset is less than a threshold, the Frequency of the Local Oscillator is increased by a value (e.g., L1).

When one or more of the first sequence 9 to the first sequence 12 have been detected in the BandF1, it is confirmed that a + Frequency Offset has occurred. When the Frequency Offset is less than the threshold, the Frequency of the Local Oscillator is reduced by a value (e.g., L1).

When one or more of the first sequence 5 to the first sequence 8 are detected in the Band F0, it is confirmed that a - Frequency Offset has occurred. When the Frequency Offset is greater than or equal to the threshold, it is confirmed that the - larger Frequency Offset has been transmitted. When it is determined that the - larger Frequency Offset occurs, the Frequency of the Local Oscillator is increased by a large value (e.g., L2).

When one or more of the first sequence 13 to the first sequence 16 have been detected in the BandF1, it is confirmed that a + Frequency Offset has occurred. When the Frequency Offset is greater than or equal to the threshold, it is confirmed that the + larger Frequency Offset has been transmitted. When it is determined that the + larger Frequency Offset occurs, the Frequency of the Local Oscillator is reduced by a large value (e.g., L2).

Example six

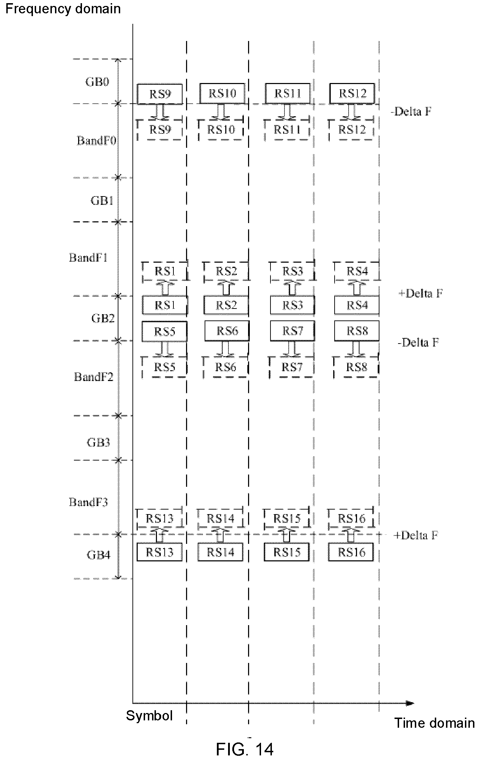

As shown in FIG. 14, for an M-bit MC OOK with M ≥ 2 (e.g., a 4-bit MC OOK), 4 Frequency bands are configured in frequency domain, defined as BandF0, BandF1, BandF2, and BandF3, respectively. Each band occupies multiple subcarriers in frequency domain, and the LP-WUS signal is transmitted by adopting an MC-OOK scheme on each band. At the same time, the system has configured 5 Guardbands for the LP-WUS, defined as GB0, GB1, GB2, GB3, and GB4.

(1) The transmitting end may transmit 1 sequence in the GB0, transmit multiple sequences in the GB2, and transmit 1 sequence in the GB4. For example, at a moment, any one of the first sequence 9 to the first sequence 12 is transmitted in the GB0. In the GB2, the first sequence 1 and the first sequence 5 are transmitted, or the first sequence 2 and the first sequence 6 are transmitted, or the first sequence 3 and the first sequence 7 are transmitted, or the first sequence 4 and the first sequence 8 are transmitted. In the GB4, any one of the first sequence 13 to the first sequence 16 is transmitted.

As shown in FIG. 14, RS1 to RS4 occupy a same frequency domain resource, but occupy different time domain resources. RS5 to RS8 correspond to a same frequency domain resource, but different time domain resources. RS9 to RS12 occupy a same frequency domain resource, but occupy different time domain resources. RS13 to RS16 correspond to a same frequency domain resource, but different time domain resources.

All the RS1 to RS4 may be the same, all the RS1 to RS4 may be different, or the RS1 to RS4 may be partially the same. All the RS5 to RS8 may be the same, all the RS5 to RS8 may be different, or the RS5 to RS8 may be partially the same. All the RS9 to RS12 may be the same, all the RS9 to RS12 may be different, or the RS9 to RS12 may be partially the same. All the RS13 to RS16 may be the same, all the RS13 to RS16 may be different, or the RS13 to RS16 may be partially the same.

As an example, an ending subcarrier of the second frequency domain resource occupied by the first sequence 9 to the first sequence 12 is located at a lower boundary of the GB0.

As an example, a bandwidth of the second frequency domain resource occupied by any one of the first sequence 1 to the first sequence 4 or any one of the first sequence 5 to the first sequence 8 is less than or equal to half of a bandwidth of the GB2. That is, the frequency domain resource occupied by the first sequence does not overlap with the frequency domain resource occupied by the LP-WUS.

As an example, the first sequence 13 to the first sequence 16 are located in the GB4.

(2) The receiving end may perform the following operations.

When one or more of the first sequence 9 to the first sequence 12 have been detected in the BandF0, it is confirmed that a - Frequency Offset has occurred. When the Frequency Offset is less than a threshold, the Frequency of the Local Oscillator is increased by a value (e.g., L1).

When one or more of the first sequence 1 to the first sequence 4 have been detected in the BandF1, it is confirmed that a + Frequency Offset has occurred. When the Frequency Offset is less than the threshold, the Frequency of the Local Oscillator is reduced by a value (e.g., L1).

When one or more of the first sequence 5 to the first sequence 8 have been detected in the BandF1, it is confirmed that a - Frequency Offset has occurred. When the Frequency Offset is less than the threshold, the Frequency of the Local Oscillator is increased by a value (e.g., L1).

When one or more of the first sequence 13 to the first sequence 16 have been detected in the BandF3, it is confirmed that a + Frequency Offset has occurred. When the Frequency Offset is less than the threshold, the Frequency of the Local Oscillator is reduced by a value (e.g., L1).

When one or more of the first sequence 9 to the first sequence 12 have been detected in the BandF0, it is confirmed that a - Frequency Offset has occurred. When the Frequency Offset is greater than or equal to the threshold, the Frequency of the Local Oscillator is increased by a large value (e.g., L2).

When one or more of the first sequence 1 to the first sequence 4 have been detected in the BandF1, it is confirmed that a + Frequency Offset has occurred. When the Frequency Offset is greater than or equal to the threshold, the Frequency of the Local Oscillator is reduced by a large value (e.g., L2).

When one or more of the first sequence 5 to the first sequence 8 have been detected in the BandF1, it is confirmed that a - Frequency Offset has occurred. When the Frequency Offset is greater than or equal to the threshold, the Frequency of the Local Oscillator is increased by a large value (e.g., L2).

When one or more of the first sequence 13 to the first sequence 16 have been detected in the BandF3, it is confirmed that a + Frequency Offset has occurred. When the Frequency Offset is greater than or equal to the threshold, the Frequency of the Local Oscillator is reduced by a large value (e.g., L2).

Example seven

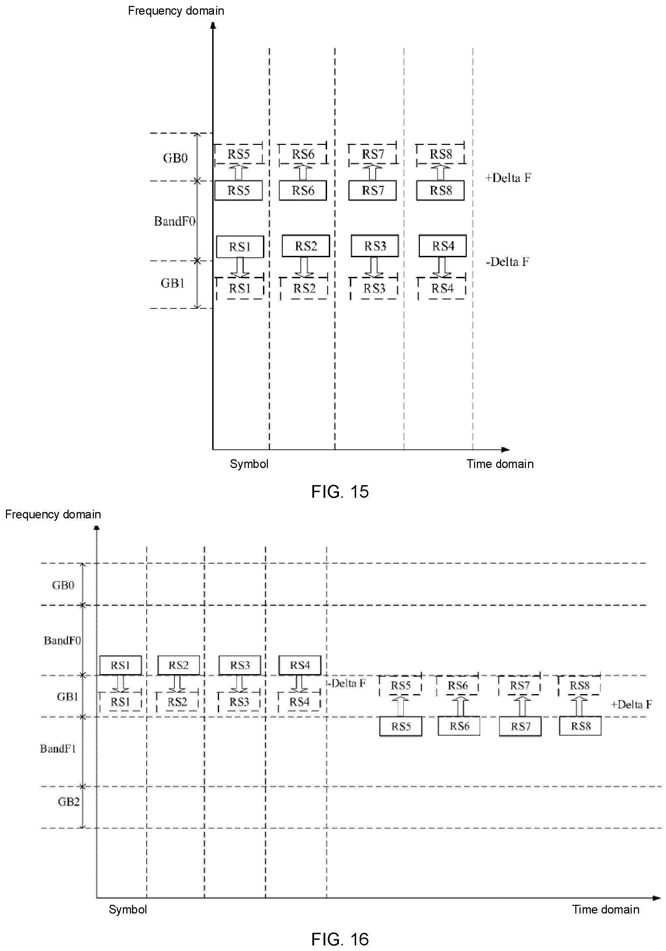

As shown in FIG. 15, for a 1-bit MC-OOK, 1 Frequency band is configured in frequency domain, defined as BandFO. Each band occupies multiple subcarriers in frequency domain. The LP-WUS is transmitted adopting an MC-OOK scheme on each band. At the same time, the system has configured 2 GBs for the LP-WUS, defined as GB0 and GB1, respectively.

(1) The transmitting end may transmit 2 sequences in the BandFO. For example, at a moment, in the BandF0, the first sequence 1 and the first sequence 5 are transmitted, or the first sequence 2 and the first sequence 6 are transmitted, or the first sequence 3 and the first sequence 7 are transmitted, or the first sequence 4 and the first sequence 8 are transmitted.

As shown in FIG. 15, in the BandF0, RS1 to RS4 occupy a same frequency domain resource, but occupy different time domain resources. In the BandF0, RS5 to RS8 occupy a same frequency domain resource, but occupy different time domain resources.

All the RS1 to RS4 may be the same, all the RS1 to RS4 may be different, or the RS1 to RS4 may be partially the same. All the RS5 to RS8 may be the same, all the RS5 to RS8 may be different, or the RS5 to RS8 may be partially the same.

As an example, an ending subcarrier of the second frequency domain resource occupied by the first sequence 1 to the first sequence 4 is located at a lower boundary of the BandFO.

As an example, a starting subcarrier of the second frequency domain resource occupied by the first sequence 5 to the first sequence 8 is located at an upper boundary of the BandFO.

As an example, a bandwidth of the second frequency domain resource occupied by the first sequence 1 to the first sequence 4 is less than or equal to a bandwidth of the BandFO.

As an example, a bandwidth of the second frequency domain resource occupied by the first sequence 5 to the first sequence 8 is less than or equal to the bandwidth of the BandFO.

As an example, the frequency domain resource occupied by the first sequence 5 to the first sequence 8 does not overlap with the frequency domain resource occupied by the first sequence 1 to the first sequence 4.

As an example, the transmitting end does not transmit the LP-WUS when transmitting the first sequence.

(2) The receiving end may perform the following operations.

When in the BandF0, one or more of the first sequence 5 to the first sequence 8 have been detected but the first sequence 1 to the first sequence 4 have not been detected, it is confirmed that a - Frequency Offset has occurred. When it is determined that the - Frequency Offset occurs, the Frequency of the Local Oscillator is increased by a value (e.g., L1).

When in the BandF0, one or more of the first sequence 1 to the first sequence 4 have been detected but the first sequence 5 to the first sequence 8 have not been detected, it is confirmed that a + Frequency Offset has occurred. When it is determined that the + Frequency Offset occurs, the Frequency of the Local Oscillator is reduced by a value (e.g., L1).

Example eight

As shown in FIG. 16, for a 2-bit MC-OOK, 2 Frequency bands are configured in frequency domain, defined as BandFO and BandF1, respectively. Each band occupies multiple subcarriers in frequency domain. The LP-WUS signal is transmitted adopting an MC-OOK scheme on each band. At the same time, the system has configured 3 GBs for the LP-WUS, defined as GB0, GB1, and GB2, respectively.

(1) The transmitting end may transmit 1 sequence in a Band. For example, at a moment, any one of the first sequence 1 to the first sequence 4 is transmitted in the BandF0, and any one of the first sequence 5 to the first sequence 8 is transmitted in the BandF1.

As shown in FIG. 16, in the BandF0, RS1 to RS4 occupy a same frequency domain resource, but occupy different time domain resources. In the BandF1, RS5 to RS8 occupy a same frequency domain resource, but occupy different time domain resources. The time domain resources occupied by RS1 to RS4 are different from the time domain resources occupied by RS1 to RS4.

All the RS1 to RS4 may be the same, all the RS1 to RS4 may be different or the RS1 to RS4 may be partially the same. All the RS5 to RS8 may be the same, all the RS5 to RS8 may be different, or the RS5 to RS8 may be partially the same.

As an example, an ending subcarrier of the second frequency domain resource occupied by the first sequence 1 to the first sequence 4 is located at a lower boundary of the BandFO.

As an example, a starting subcarrier of the second frequency domain resource occupied by the first sequence 5 to the first sequence 8 is located at an upper boundary of the BandF1.

As an example, a bandwidth of the second frequency domain resource occupied by the first sequence 1 to the first sequence 4 is less than or equal to a bandwidth of the BandFO.

As an example, a bandwidth of the second frequency domain resource occupied by the first sequence 5 to the first sequence 8 is less than or equal to a bandwidth of the BandF1.

As an example, the transmitting end does not transmit the LP-WUS when transmitting the first sequence.

(2) The receiving end may perform the following operations.

When any one of the first sequence 1 to the first sequence 4 has not detected in the BandF0, it is confirmed that a - Frequency Offset has occurred. When it is determined that the - Frequency Offset occurs, the Frequency of the Local Oscillator is increased by a value (e.g., L1).

When any one of the first sequence 5 to the first sequence 8 has not detected in the BandF1, it is confirmed that a + Frequency Offset has occurred. When it is determined that the + Frequency Offset occurs, the Frequency of the Local Oscillator is reduced by a value (e.g., L1).

Example nine

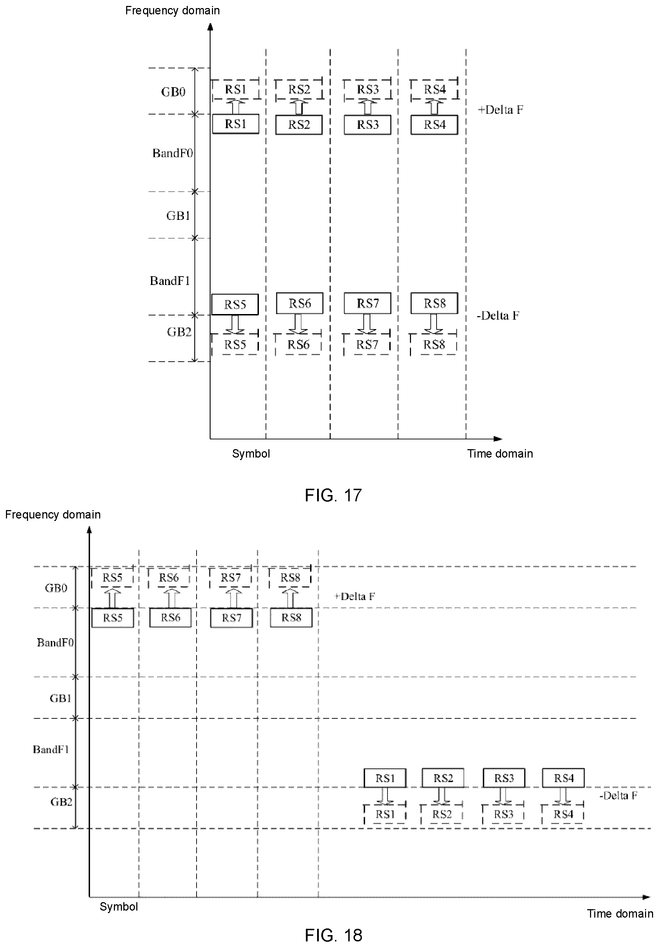

As shown in FIG. 17, for a 2-bit MC-OOK, 2 Frequency bands are configured in frequency domain, defined as BandFO and BandF1, respectively. Each band occupies multiple subcarriers in frequency domain, and the LP-WUS signal is transmitted adopting an MC-OOK scheme on each band. At the same time, the system has configured 3 GBs for the LP-WUS, defined as GB0, GB1, and GB2, respectively.

(1) The transmitting end may transmit 1 sequence in a Band. For example, at a moment, any one of the first sequence 1 to the first sequence 4 is transmitted in the BandF0, and any one of the first sequence 5 to the first sequence 8 is transmitted in the BandF1.

For example, as shown in FIG. 17, in the BandF0, RS1 to RS4 occupy a same frequency domain resource, but occupy different time domain resources. In the BandF1, RS5 to RS8 occupy a same frequency domain resource, but occupy different time domain resources.

All the RS1 to RS4 may be the same, all the RS1 to RS4 may be different, or the RS1 to RS4 may be partially the same. All the RS5 to RS8 may be the same, all the RS5 to RS8 may be different, or the RS5 to RS8 may be partially the same.

As an example, a starting subcarrier of the second frequency domain resource occupied by the first sequence 1 to the first sequence 4 is located at an upper boundary of the BandFO.

As an example, an ending subcarrier of the second frequency domain resource occupied by the first sequence 5 to the first sequence 8 is located at a lower boundary of the BandF1.

As an example, a bandwidth of the second frequency domain resource occupied by the first sequence 1 to the first sequence 4 is less than or equal to a bandwidth of the BandFO.

As an example, a bandwidth of the second frequency domain resource occupied by the first sequence 5 to the first sequence 8 is less than or equal to a bandwidth of the BandF1.

As an example, the transmitting end does not transmit the LP-WUS when transmitting the first sequence.

(2) The receiving end may perform the following operations.

When any one of the first sequence 1 to the first sequence 4 has not detected in the BandF0, it is confirmed that a + Frequency Offset has occurred. When it is determined that the + Frequency Offset occurs, the Frequency of the Local Oscillator is reduced by a value (e.g., L1).

When any one of the first sequence 5 to the first sequence 8 has not been detected in the BandF1, it is confirmed that a - Frequency Offset has occurred. When it is determined that the - Frequency Offset occurs, the Frequency of the Local Oscillator is increased by a value (e.g., L1).

Example ten

As shown in FIG. 18, for a 2-bit MC-OOK, 2 Frequency bands are configured in frequency domain, defined as BandFO and BandF1, respectively. Each band occupies multiple subcarriers in frequency domain, and the LP-WUS signal is transmitted adopting an MC-OOK scheme on each band. At the same time, the system has configured 3 GBs for the LP-WUS, defined as GB0, GB1, and GB2, respectively.

(1) The transmitting end may transmit 1 sequence in 1 Band. For example, in the BandF0, any one of the first sequence 5 to the first sequence 8 is transmitted, and in the BandF1, any one of the first sequences 1 to the first sequence 4 is transmitted.

For example, as shown in FIG. 18, in the BandF0, RS5 to RS8 occupy a same frequency domain resource, but occupy different time domain resources. In the BandF1, RS1 to RS4 occupy a same frequency domain resource, but occupy different time domain resources. The time frequency resources occupied by RS5 to RS8 are different from the time frequency resources occupied by RS1 to RS4.

All the RS1 to RS4 may be the same, all the RS1 to RS4 may be different, or the RS1 to RS4 may be partially the same. All the RS5 to RS8 may be the same, all the RS5 to RS8 may be different, or the RS5 to RS8 may be partially the same.

As an example, a starting subcarrier of the second frequency domain resource occupied by the first sequence 5 to the first sequence 8 is located at an upper boundary of the BandFO.

As an example, an ending subcarrier of the second frequency domain resource occupied by the first sequence 1 to the first sequence 4 is located at a lower boundary of the BandF1.

As an example, a bandwidth of the second frequency domain resource occupied by the first sequence 5 to the first sequence 8 is less than or equal to a bandwidth of the BandFO.

As an example, a bandwidth of the second frequency domain resource occupied by the first sequence 1 to the first sequence 4 is less than or equal to a bandwidth of the BandF1.

As an example, the transmitting end does not transmit the LP-WUS when transmitting the first sequence.

(2) The receiving end may perform the following operations.

When any one of the first sequence 5 to the first sequence 8 has not detected in the BandF0, it is confirmed that a + Frequency Offset has occurred. When it is determined that + Frequency Offset occurs, the Frequency of the Local Oscillator is reduced by a value (e.g., L1).

When any one of the first sequence 1 to the first sequence 4 has not detected in the BandF1, it is confirmed that a - Frequency Offset has occurred. When it is determined that the - Frequency Offset occurs, the Frequency of the Local Oscillator is increased by a value (e.g., L1).

Example eleven

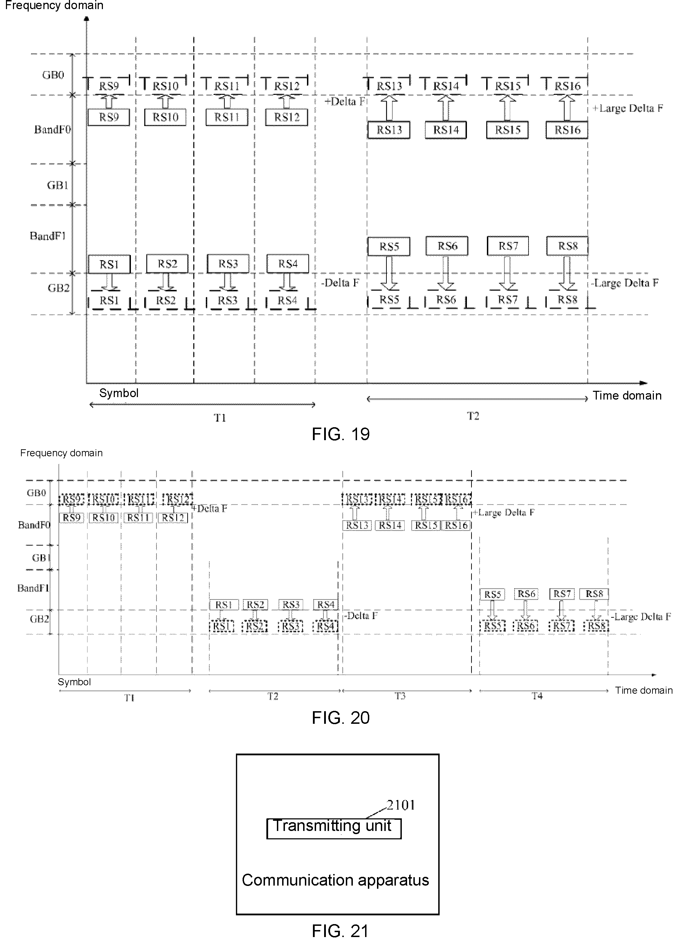

As shown in FIG. 19, for a 2-bit MC-OOK, 2 Frequency bands are configured in frequency domain, defined as BandFO and BandF1, respectively. Each band occupies multiple subcarriers in frequency domain, and the LP-WUS signal is transmitted adopting an MC-OOK scheme on each band. At the same time, the system has configured 3 GBs for the LP-WUS, defined as GB0, GB1, and GB2, respectively.

(1) The transmitting end may transmit 1 sequence in a Band. For example, in the BandF0, any one of the first sequence 9 to the first sequence 16 is transmitted, and in the BandF1, any one of the first sequence 1 to the first sequence 8 is transmitted.

For example, as shown in FIG. 19, in the BandF1, RS1 to RS4 occupy a same frequency domain resource and occupy a time domain resource T1; and RS5 to RS8 occupy a same frequency domain resource and occupy a time domain resource T2. In the BandF0, RS9 to RS12 occupy a same frequency domain resource and occupy the time domain resource T1, and RS13 to RS16 occupy a same frequency domain resource and occupy the time domain resource T2. T2 is greater than T1.

All the RS1 to RS8 may be the same, all the RS1 to RS8 may be different, or the RS1 to RS8 may be partially the same. All the RS9 to RS16 may be the same, all the RS9 to RS16 may be different, or the RS9 to RS16 may be partially the same.

As an example, there is a spacing, Gap1, between a starting subcarrier of the second frequency domain resource occupied by the first sequence 9 to the first sequence 12 and an upper boundary of the BandFO.

As an example, there is a spacing, Gap2, between a starting subcarrier of the second frequency domain resource occupied by the first sequence 13 to the first sequence 16 and the upper boundary of the BandFO. Gap2 is greater than Gap1.

As an example, there is a spacing, Gap3, between a starting subcarrier of the second frequency domain resource occupied by the first sequence 1 to the first sequence 4 and an upper boundary of the BandF1.

As an example, there is a spacing, Gap4, between a starting subcarrier of the second frequency domain resource occupied by the first sequence 5 to the first sequence 8 and the upper boundary of the BandF1. Gap4 is greater than Gap3.

As an example, a bandwidth of the second frequency domain resource occupied by the first sequence 9 to the first sequence 16 is less than or equal to a bandwidth of the BandFO.

As an example, a bandwidth of the second frequency domain resource occupied by the first sequence 1 to the first sequence 8 is less than or equal to a bandwidth of the BandF1.

As an example, the transmitting end does not transmit the LP-WUS when transmitting the first sequence.

(2) The receiving end may perform the following operations.

When in the T1, any one of the first sequence 9 to the first sequence 12 has not detected in the BandF0, it is confirmed that a + Frequency Offset has occurred. When it is determined that the + Frequency Offset occurs, the Frequency of the Local Oscillator is reduced by a value (e.g., L1).

When in the T1, any one of the first sequence 1 to the first sequence 4 has not detected in the BandF1, it is confirmed that a - Frequency Offset has occurred. When it is determined that the - Frequency Offset occurs, the Frequency of the Local Oscillator is increased by a value (e.g., L1).

When in the T2, any one of the first sequence 13 to the first sequence 16 has not been detected in the BandF0, it is confirmed that a + Large Frequency Offset has occurred. When it is determined that the + Large Frequency Offset occurs, the Frequency of the Local Oscillator is reduced by a large value (e.g., L2).

When in the T1, any one of the first sequence 5 to the first sequence 8 has not been detected in the BandF1, it is confirmed that a - Large Frequency Offset has occurred. When it is determined that the - Large Frequency Offset occurs, the Frequency of the Local Oscillator is increased by a large value (e.g., L2).

Example twelve

As shown in FIG. 20, for a 2-bit MC-OOK, 2 Frequency bands are configured in frequency domain, defined as BandFO and BandF1, respectively. Each band occupies multiple subcarriers in frequency domain, and the LP-WUS signal is transmitted adopting an MC-OOK scheme on each band. At the same time, the system has configured 3 GBs for the LP-WUS, defined as GB0, GB1, and GB2, respectively.

(1) The transmitting end may transmit 1 sequence in a Band. For example, at a moment, any one of the first sequence 9 to the first sequence 16 is transmitted in the BandFO. For another example, at a moment, any one of the first sequence 1 to the first sequence 8 is transmitted in the BandF1.

For example, as shown in FIG. 20, in the BandF1, RS1 to RS4 occupy a same frequency domain resource and occupy a time domain resource T2; and RS5 to RS8 occupy a same frequency domain resource and occupy a time domain resource T4. T4 is greater than T2. In the BandF0, RS9 to RS12 occupy a same frequency domain resource and occupy a time domain resource T1, and RS13 to RS16 occupy a same frequency domain resource and occupy a time domain resource T3. T3 is greater than T1 and T2 is less than T3.

All the RS1 to RS8 may be the same, all the RS1 to RS8 may be different, or the RS1 to RS8 may be partially the same. All the RS9 to RS16 may be the same, all the RS9 to RS16 may be different, or the RS9 to RS16 may be partially the same.

As an example, there is a spacing, Gap1, between a starting subcarrier of the second frequency domain resource occupied by the first sequence 9 to the first sequence 12 and an upper boundary of the BandFO.

As an example, there is a spacing, Gap2, between a starting subcarrier of the second frequency domain resource occupied by the first sequence 13 to the first sequence 16 and the upper boundary of the BandFO.

As an example, there is a spacing, Gap3, between an ending subcarrier of the second frequency domain resource occupied by the first sequence 1 to the first sequence 4 and a lower boundary of BandF1.

As an example, there is a spacing, Gap4, between an ending subcarrier of the second frequency domain resources occupied by the first sequence 5 to the first sequence 8 and the lower boundary of the BandF1.

As an example, a bandwidth of the second frequency domain resource occupied by the first sequence 9 to the first sequence 16 is less than or equal to a bandwidth of the BandFO.

As an example, a bandwidth of the second frequency domain resource occupied by the first sequence 1 to the first sequence 8 is less than or equal to a bandwidth of the BandF1.

As an example, the transmitting end does not transmit the LP-WUS when transmitting the first sequence.

(2) The receiving end may perform the following operations.

When in the T1, one or more of the first sequence 9 to the first sequence 12 have not been detected in the BandF0, it is confirmed that a + Frequency Offset has occurred. When it is determined that the + Frequency Offset occurs, the Frequency of the Local Oscillator is reduced by a value (e.g., L1).

When in the T2, one or more of the first sequence 1 to the first sequence 4 have not been detected in the BandF1, it is confirmed that a - Frequency Offset has occurred. When it is determined that the - Frequency Offset occurs, the Frequency of the local oscillator is increased by a value (e.g., L1).

When in the T3, one or more of the first sequence 13 to the first sequence 16 have not been detected in the BandF0, it is confirmed that a + Large Frequency Offset has occurred. When it is determined that there is the + Large Frequency Offset, the Frequency of the Local Oscillator is reduced by a large value (e.g., L2).

When in the T4, one or more of the first sequence 5 to the first sequence 8 have not been detected in the BandF1, it is confirmed that a - Large Frequency Offset has occurred. When it is determined that the + Large Frequency Offset occurs, the Frequency of the Local Oscillator is increased by a large value (e.g., L2).

The schemes in the above embodiments of the present disclosure may be combined without contradiction.

It can be understood that in order to achieve the functions mentioned above, a communication apparatus contains corresponding hardware structures and/or software modules for performing respective functions. Those skilled in the art should easily realize that, in combination with the exemplary algorithm steps described in the embodiments of the present disclosure, the present disclosure can be implemented in the form of hardware or a combination of hardware and computer software. Whether a certain function is performed via the hardware or the computer software-driven hardware depends on the specific application and restrictive conditions on design of the technical solutions. Professional technicians may use different methods to implement the described functions for each specific application, but such implementation should not be considered beyond the scope of the present disclosure.

In the embodiments of the present disclosure, the communication apparatus may be divided into functional modules according to the foregoing method embodiments, for example, may be divided in a way that each functional module corresponds to each function, or two or more functions are integrated into one functional module. The integrated module may be implemented in the form of hardware, or may be implemented in the form of software. It should be noted that the division of the modules in embodiments of the present disclosure is schematic, which is only a logical functional division, and there may be other divisions for in actual implementations. The following is an example of dividing each functional module corresponding to each function.

FIG. 21 is a schematic structural diagram of a communication apparatus provided in the embodiments of the present disclosure, and the communication apparatus may perform the communication method provided in the above method embodiments. As shown in FIG. 21, the communication apparatus includes: a transmitting unit 2101 configured to transmit a first sequence in a first resource, where the first sequence is used to assist a receiving end in determining a frequency offset amount.

In an example, a first frequency domain resource corresponding to the first resource includes at least one of: part or all of a frequency domain resource in a guard band configured for a first signal; part or all of a frequency domain resource in a third frequency domain configured for the first signal; part or all of a frequency domain resource in a fourth frequency domain resource occupied by the first signal; a fifth frequency domain resource having a first preset spacing with the third frequency domain resource in frequency domain; and a sixth frequency domain resource having a second preset spacing with the fourth frequency domain resource in frequency domain.

In some examples, the first resource includes at least one second time domain resource in time domain and at least one second frequency domain resource in frequency domain, where each second time domain resource corresponds to a second frequency domain resource.

In some examples, second frequency domain resources corresponding to different second time domain resources are configured independently; the second frequency domain resources corresponding to different second time domain resources are configured by a transmitting end; the second frequency domain resources corresponding to different second time domain resources are not the same as each other; and the second frequency domain resources corresponding to different second time domain resources are taken from a set of second frequency domain resources.

In some examples, the second time domain resource occupied by the first sequence does not overlap in the time domain with the fourth time domain resource occupied by the first signal.

In some examples, the second time domain resource occupied by the first sequence overlaps in the time domain with the fourth time domain resource occupied by the first signal, one of the following operations is performed: transmit the first signal and stop transmitting the first sequence; or, stop transmitting the first sequence and the first signal.

In some examples, the transmitting unit 2101, for example, is configured to transmit multiple first sequences in a same first resource.

In some examples, the transmitting unit 2101, for example, is configured to transmit a first sequence in each first resource of multiple first resources.

In some examples, the transmitting unit 2101, for example, is configured to transmit a first sequence in each first resource of N first resources, where N is a positive integer; and transmit multiple first sequences in each first resource of M first resources, where M is a positive integer.

In some examples, for multiple first sequences transmitted in a same first resource, the multiple first sequences satisfy at least one of: second frequency domain resources occupied by respective first sequences of the multiple first sequences are configured independently; the second frequency domain resources occupied by the respective first sequences of the multiple first sequences are configured by a transmitting end; second frequency domain resources occupied by the respective first sequences of the multiple first sequences are different from each other; or the second time domain resources occupied by the respective first sequences of the multiple first sequences are different from the fourth time domain resource occupied by the first signal.

In some examples, all elements of the first sequence are 1, or the elements of the reference sequence include 1 and 0.

In some examples, the generation mode for the first sequence includes one of: a multiple-carrier amplitude keying (MC-OOK) mode; or, a multiple-carrier frequency-shift keying (MC-FSK) mode.

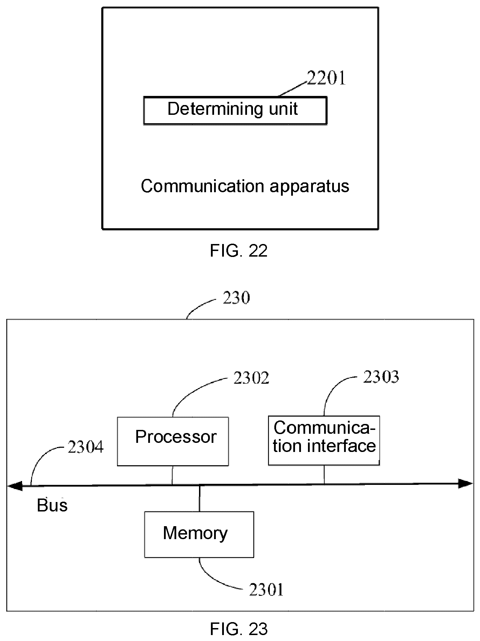

FIG. 22 is a schematic structural diagram of another communication apparatus provided in the embodiments of the present disclosure, and the communication apparatus may perform the communication method provided in the above method embodiments. As shown in FIG. 22, the communication apparatus includes: a determining unit 2201 configured to determine a frequency domain location of a seventh frequency domain resource where a first sequence has been detected. The determining unit 2201 is also configured to determine a frequency domain offset adjustment amount according to the frequency domain location of the seventh frequency domain resource.

In some examples, the determining unit 2201, for example, is configured to: determine a frequency offset amount according to the frequency domain location of the seventh frequency domain resource and a frequency domain location of a second frequency domain resource corresponding to the seventh frequency domain resource; and determine the frequency offset adjustment amount according to the frequency offset amount.

In some examples, the frequency offset amount is positive and the frequency offset adjustment amount is negative; and the frequency offset amount is negative, and the frequency offset adjustment amount is positive.

In some examples, a monotonically increasing relationship is satisfied between an absolute value of the frequency offset adjustment amount and an absolute value of the frequency offset amount.

In some examples, all elements of the first sequence are 1, or the elements of the reference sequence include 1 and 0.

In some examples, the first sequence is the same as the first signal.

In some examples, the generation mode for the first sequence includes one of: a multiple-carrier on-off keying (MC-OOK) mode; or, a multiple-carrier frequency-shift keying (MC-FSK) mod.

In a case of implementing the functions of the integrated modules in a hardware form, the embodiments of the present disclosure provide another structure of the communication apparatus involved in the above embodiments. As shown in FIG. 23, a communication apparatus 230 includes a processor 2302 and a bus 2304. In some embodiments, the communication apparatus may further include a memory 2301. In some embodiments, the communication apparatus may further include a communication interface 2303.

The processor 2302 may implement or execute various exemplary logical blocks, modules, and circuits described in conjunction with the embodiments of the present disclosure. The processor 2302 may be a central processing unit, a general purpose processor, a digital signal processor, an application specific integrated circuit, a field programmable gate array or other programmable logic devices, a transistor logic device, a hardware component, or any combination thereof, which may implement or execute various exemplary logic blocks, modules, and circuits described in conjunction with the embodiments of the present disclosure. The processor 2302 may also be a combination for implementing computing functions, e.g., a combination containing one or more microprocessors, a combination of DSP (digital signal processor) and a microprocessor, etc.

The communication interface 2303 is used to connect with other devices through a communication network. The communication network may be an Ethernet, a wireless access network, a wireless local area network (WLAN), etc.

The memory 2301 may be, but is not limited to, a read-only memory (ROM) or other types of static storage devices that may store static information and instructions, a random access memory (RAM) or other types of dynamic storage devices that may store information and instructions; may also be an electrically erasable programmable read-only memory (EEPROM), a magnetic disk storage medium or other magnetic storage devices, or any other medium that can be used to carry or store desired program code with the form of instructions or data structures and is capable of being accessed by a computer.

As an implementation, the memory 2301 may exist independently from the processor 2302, and the memory 2301 may be connected to the processor 2302 through the bus 2304 for storing instructions or program codes. When calling and executing the instructions or program codes stored in the memory 2301, the processor 2302 can implement the communication method provided in the embodiments of the present disclosure.

In another implementation, the memory 2301 may also be integrated with the processor 2302.

The bus 2304 may be an extended industry standard architecture (EISA) bus, etc. The bus 2304 may be classified into an address bus, a data bus, a control bus, etc. For ease of representation, only one thick line is used for representation in FIG. 23, but it does not represent that there is only one bus or one type of buses.

Some embodiments of the present disclosure provide a computer-readable storage medium (e.g., non-transitory computer-readable storage medium), and the computer-readable storage medium stores computer program instructions therein. The computer program instructions, when executed on a computer, cause the computer to perform the communication method in any embodiment of the above embodiments.

Exemplarily, the above computer-readable storage medium may include, but is not limited to, a magnetic storage device (e.g., a hard disk, a floppy disk, or a magnetic tape, etc.), an optical disk (e.g., a compact disk (CD), a digital versatile disk (DVD), etc.), a smart card, and a flash memory device (e.g., an erasable programmable read only memory (EPROM), a card, a stick, or a key drive, etc.). The various computer-readable storage mediums described in the present disclosure may represent one or more devices and/or other machine-readable storage mediums for storing information. The term "machine-readable storage medium" may include, but is not limited to, a wireless channel and various other mediums capable of storing, containing, and/or carrying instructions and/or data.

The embodiments of the present disclosure provide a computer program product containing instructions, and the computer program product, when executed on a computer, causes the computer to perform the communication method in any embodiment of the above embodiments.

The above is only a specific implementation of the present disclosure, but the scope of protection of the present disclosure is not limited to thereto. Any changes or replacements within the technical scope disclosed in the present disclosure should be included within the protection scope of the present disclosure. Therefore, the protection scope of the present disclosure should be based on the protection scope of the claims.

**Claims**

1. A communication method, applied to a transmitting end, **characterized by** comprising:
   transmitting a first sequence in a first resource.

2. The method according to claim 1, wherein a first frequency domain resource corresponding to the first resource comprises at least one of:

   part or all of a frequency domain resource in a guard band configured for a first signal;
   part or all of a frequency domain resource in a third frequency domain resource configured for the first signal;
   part or all of a frequency domain resource in a fourth frequency domain resource occupied by the first signal;
   a fifth frequency domain resource having a first preset spacing with the third frequency domain resource in frequency domain; or
   a sixth frequency domain resource having a second preset spacing with the fourth frequency domain resource in frequency domain.

3. The method according to claim 2, wherein the first resource comprises at least one second time domain resource in time domain and comprises at least one second frequency domain resource in frequency domain, and each second time domain resource corresponds to a second frequency domain resource.

4. The method according to claim 3, wherein,

   second frequency domain resources corresponding to different second time domain resources are configured independently;
   the second frequency domain resources corresponding to different second time domain resources are configured by the transmitting end;
   the second frequency domain resources corresponding to different second time domain resources are different; or
   the second frequency domain resources corresponding to different second time domain resources are taken from a set of second frequency domain resources.

5. The method according to claim 3, wherein a second time domain resource occupied by the first sequence does not overlap in time domain with the fourth time domain resource occupied by the first signal.

6. The method according to claim 3, wherein a second time domain resource occupied by the first sequence overlaps in time domain with the fourth time domain resource occupied by the first signal, and one of operations as follows is performed:

   transmitting the first signal and stop transmitting the first sequence; or
   stopping transmitting the first sequence and the first signal.

7.  The method according to claim 1, wherein the transmitting the first sequence in the first resource comprises: transmitting multiple first sequences in a same first resource.

8.  The method according to claim 1, wherein the transmitting the first sequence in the first resource comprises: transmitting a first sequence in each first resource of multiple first resources.

9.  The method according to claim 1, wherein the transmitting the first sequence in the first resource comprises:

    transmitting a first sequence in each first resource of N first resources, wherein the N is a positive integer; or
    transmitting multiple first sequences in each first resource of M first resources, wherein the M is a positive integer.

10. The method according to claim 7 or 9, wherein for multiple first sequences transmitted in a same first resource, the multiple first sequences satisfy at least one of:

    second frequency domain resources occupied by respective first sequences of the multiple first sequences are configured independently;
    the second frequency domain resources occupied by the respective first sequences of the multiple first sequences are configured by the transmitting end;
    the second frequency domain resources occupied by the respective first sequences of the multiple first sequences are different; and
    the second time domain resources occupied by the respective first sequences of the multiple first sequences are different from a fourth time domain resource occupied by a first signal.

11. The method according to claim 1, wherein all elements of the first sequence are 1, or the elements of the first sequence comprise 1 and 0.

12. The method according to claim 2, wherein the first sequence is the same as the first signal.

13. The method according to claim 1, wherein a generation mode for the first sequence comprises one of:

    a multiple-carrier on-off keying, MC-OOK, mode; or
    a multiple-carrier frequency-shift keying, MC-FSK, mode.

14. A communication method, applied to a receiving end, **characterized by** comprising:

    determining a frequency domain location of a seventh frequency domain resource where a first sequence has been detected; and
    determining a frequency domain offset adjustment amount according to the frequency domain location of the seventh frequency domain resource.

15. The method according to claim 14, wherein the determining the frequency domain offset adjustment amount according to the frequency domain location of the seventh frequency domain resource comprises:

    determining a frequency offset amount according to the frequency domain location of the seventh frequency domain resource and a frequency domain location of a second frequency domain resource corresponding to the seventh frequency domain resource; and
    determining the frequency offset adjustment amount according to the frequency offset amount.

16. The method according to claim 15, wherein,

    the frequency offset amount is positive, and the frequency offset adjustment amount is negative; or
    the frequency offset amount is negative, and the frequency offset adjustment amount is positive.

17. The method according to claim 15, wherein a monotonically increasing relationship is satisfied between an absolute value of the frequency offset adjustment amount and an absolute value of the frequency offset amount.

18. The method according to claim 14, wherein all elements of the first sequence are 1, or the elements of the first sequence comprise 1 and 0.

**19.** The method according to claim 14, wherein the first sequence is the same as a first signal.

**20.** The method according to claim 14, wherein a generation mode for the first sequence comprises one of:

a multiple-carrier on-off keying, MC-OOK, mode; or
a multiple-carrier frequency-shift keying, MC-FSK, mode.

**21.** A communication apparatus, **characterized by** comprising a memory, a processor, and computer program instructions stored on the memory and executable on the processor, wherein the processor, upon executing the computer program instructions, implements the method according to any one of claims 1 to 20.

**22.** A computer-readable storage medium, **characterized in that** the computer-readable storage medium comprises computer program instructions; and the computer program instructions, upon being executed on a computer, enable the computer to perform the method according to any one of claims 1 to 20.

Padded data
on a subcarrier $S = [S_0, S_1, \ldots, S_{K-1}]$

$\dfrac{S_0}{S_1}$ N-point IFFT

$\vdots$

$S_{K-1}$

Output data $D = \{D_0, D_1, \ldots, D_{K-1}\}$ +CP MC-OOK symbol

FIG. 1

$Q_K = [\underbrace{s_0, s_0, \cdots, s_0}_{A}, \underbrace{s_1, s_1, \cdots, s_1}_{A}, \ldots, \underbrace{s_{M-1}, s_{M-1}, \cdots, s_{M-1}}_{A}]$

K-point DFT/FFT

$D_K = [d_0, d_1, d_2, d_3, \ldots, d_{K-1}]$

Other data

$d_0$
$d_1$

N-point IDFT/IFFT

$d_K$

Other data

$T_X = [t_0, t_1, t_2, t_3, \ldots, t_{N-1}]$

FIG. 2

Frequency domain

GB

Band0    LP-WUS0

GB

Band1    LP-WUS1

GB

Symbol    Time domain

FIG. 3

BB BPF f0

RF BPF

| Matching network circuit | | RF LNA | | BB AMP |

1 bit or multiple-bit ADC

Digital baseband processor

BB BPF f1

1 bit or multiple-bit ADC

FIG. 4

IF BPF f0

RF BPF

BB LPF

| Matching network circuit | | RF LNA | | IF AMP |

Intermediate frequency envelope detector

BB AMP

Sampling decision circuit

Digital baseband processor

IF BPF f1

Intermediate frequency envelope detector

BB AMP

BB LPF

FIG. 5

Receiving end

Transmitting end

FIG. 6

S101 Send a first sequence in a first resource

FIG. 7

S801: Determine a frequency domain position of a seventh frequency domain resource where a first sequence has been detected

S802: Determine a frequency offset adjustment amount based on the frequency domain position of the seventh frequency domain resource

FIG. 8

FIG. 9

FIG. 10

FIG. 11

FIG. 12

FIG. 13

FIG. 14

FIG. 15

FIG. 16

FIG. 17

FIG. 18

Frequency domain

FIG. 19

Frequency domain

FIG. 20

FIG. 21

2201

Determining unit

Communication apparatus

FIG. 22

230

2302    2303

Processor

Communica-
tion interface

2304

Bus

Memory

2301

FIG. 23

## INTERNATIONAL SEARCH REPORT

| International application No. |
|---|
| **PCT/CN2024/086756** |

| **A.** | **CLASSIFICATION OF SUBJECT MATTER** |
|---|---|

H04L27/00(2006.01)i;  H04L27/04(2006.01)i;  H04L27/12(2006.01)i

According to International Patent Classification (IPC) or to both national classification and IPC

| **B.** | **FIELDS SEARCHED** |
|---|---|

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

3GPP, CNTXT, ENTXTC, DWPI, CJFD: 多载波, 唤醒, 开关键控, 频移键控, 频域, 时频, 频偏, 偏移, 序列, 保护间隔, multi-carrier, wake-up, wakeup, on-off keying, OOK, frequency shift keying, FSK, frequency domain, time-frequency, frequency offset, offset, sequence, guard band?, GB

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 109391431 A (HUAWEI TECHNOLOGIES CO., LTD.) 26 February 2019 (2019-02-26) description, paragraphs [0105]-[0135] and [0345]-[0356], and figure 2 | 1-22 |
| A | CN 115883046 A (ZTE CORP.) 31 March 2023 (2023-03-31) entire document | 1-22 |
| A | US 2021306951 A1 (LG ELECTRONICS INC.) 30 September 2021 (2021-09-30) entire document | 1-22 |
| A | WO 2023071863 A1 (HUAWEI TECHNOLOGIES CO., LTD.) 04 May 2023 (2023-05-04) entire document | 1-22 |
| A | CN 1574827 A (SAMSUNG ELECTRONICS CO., LTD.) 02 February 2005 (2005-02-02) entire document | 1-22 |
| A | HUAWEI et al. "R1-2302341: Signal design and procedure for LP-WUS" *3GPP TSG-RAN WG1 Meeting #112bis-e*, 26 April 2023 (2023-04-26), entire document | 1-22 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 July 2024** | **10 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/086756**

| Patent document cited in search report | | | Publication date (day/month/year) | Patent family member(s) | | | Publication date (day/month/year) |
|---|---|---|---|---|---|---|---|
| CN | 109391431 | A | 26 February 2019 | EP | 4106255 | A1 | 21 December 2022 |
| | | | | US | 2020304356 | A1 | 24 September 2020 |
| | | | | EP | 3637101 | A1 | 15 April 2020 |
| | | | | RU | 2020109673 | A | 13 September 2021 |
| | | | | BR | 112020002942 | A2 | 18 August 2020 |
| | | | | US | 2022191077 | A1 | 16 June 2022 |
| | | | | JP | 2020530736 | A | 22 October 2020 |
| | | | | WO | 2019029325 | A1 | 14 February 2019 |
| | | | | US | 2019215211 | A1 | 11 July 2019 |
| | | | | CN | 112492693 | A | 12 March 2021 |
| | | | | CN | 114142979 | A | 04 March 2022 |
| CN | 115883046 | A | 31 March 2023 | WO | 2024093402 | A1 | 10 May 2024 |
| US | 2021306951 | A1 | 30 September 2021 | DE | 112019003998 | T5 | 22 April 2021 |
| | | | | WO | 2020032726 | A1 | 13 February 2020 |
| WO | 2023071863 | A1 | 04 May 2023 | CN | 116095644 | A | 09 May 2023 |
| CN | 1574827 | A | 02 February 2005 | KR | 20050000264 | A | 03 January 2005 |

Form PCT/ISA/210 (patent family annex) (July 2022)

**EP 4 641 991 A1**

**REFERENCES CITED IN THE DESCRIPTION**

**Patent documents cited in the description**

- CN 202310541631